(19) Europäisches Patentamt
European Patent Office
Office européen des brevets

(11) **EP 4 287 831 B1**

(12) **EUROPÄISCHE PATENTSCHRIFT**

(45) Veröffentlichungstag und Bekanntmachung des Hinweises auf die Patenterteilung:
**26.02.2025 Patentblatt 2025/09**

(21) Anmeldenummer: **22700996.6**

(22) Anmeldetag: **24.01.2022**

(51) Internationale Patentklassifikation (IPC):
*A01M 7/00* (2006.01)    *G06Q 10/04* (2023.01)
*A01B 79/00* (2006.01)    *G06Q 50/02* (2024.01)

(52) Gemeinsame Patentklassifikation (CPC):
**A01M 7/0089; G06Q 10/04;** A01B 79/005;
G06Q 50/02

(86) Internationale Anmeldenummer:
**PCT/EP2022/051441**

(87) Internationale Veröffentlichungsnummer:
**WO 2022/167240 (11.08.2022 Gazette 2022/32)**

(54) **VORHERSAGE VON PFLANZENSCHUTZMITTEL-RÜCKSTÄNDEN IN ERNTEPRODUKTEN**

PREDICTION OF RESIDUES OF PLANT PROTECTION AGENTS IN HARVESTED PRODUCTS

PRÉDICTION DE RÉSIDUS D'AGENTS PHYTOSANITAIRES DANS DES PRODUITS DE CULTURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.02.2021 EP 21154918**

(43) Veröffentlichungstag der Anmeldung:
**13.12.2023 Patentblatt 2023/50**

(73) Patentinhaber: **Bayer CropScience Schweiz AG**
**4052 Basel (CH)**

(72) Erfinder:
• **WEYSSER, Fabian**
**51371 Leverkusen (DE)**
• **MOGK, Georg**
**51515 Kürten (DE)**
• **MRUGALLA, Florian**
**51373 Leverkusen (DE)**

(74) Vertreter: **BIP Patents**
**c/o Bayer Intellectual Property GmbH**
**Alfred-Nobel-Straße 50**
**40789 Monheim am Rhein (DE)**

(56) Entgegenhaltungen:
EP-A1- 3 346 822    EP-B1- 3 346 822
WO-A1-2018/050580    WO-A1-2020/137085
CN-A- 112 150 300

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung befasst sich mit der Vorhersage von Pflanzenschutzmittel-Rückständen in solchen Pflanzen oder Pflanzenteilen, die zum menschlichen und/oder tierischen Verzehr gedacht sind, vorzugsweise in Gemüse und/oder Obst. Gegenstände der vorliegenden Erfindung sind ein Verfahren, eine Vorrichtung, ein System und ein Computerprogrammprodukt zur Vorhersage von Pflanzenschutzmittel-Rückständen.

Pflanzenschutzmittel-Rückstände sind Rückstände von Wirkstoffen (z.B. Insektizide, Fungizide, Herbizide oder andere Pestizide), die dem Pflanzenschutz dienten, also während der Erzeugung von Pflanzen eingesetzt wurden, und im Endprodukt nachweisbar sind.

Der Einsatz von Pflanzenschutzmitteln ist in vielen Ländern gesetzlich geregelt und soll eine Gefährdung der Gesundheit von Tier und Mensch durch Pflanzenschutzmittel ausschließen. Spezifische Anwendungsvorschriften (Wartezeiten bzw. zeitliche Abstände zwischen letzter Anwendung und Ernte, anzuwendende Menge, Anwendungsbeschränkungen) berücksichtigen die Stoffeigenschaften und nehmen so Einfluss auf das Entstehen und die Höhe von Rückständen.

In vielen Ländern werden Lebensmittel vom Handelsverkehr ausgeschlossen, wenn sie Pflanzenschutzmittel enthalten, die bestimmte für die einzelnen Stoffe festgesetzte Höchstmengen überschreiten.

Die Rückstandshöchstgehalte für Pflanzenschutzmittel in konventionellen Lebens- und Futtermitteln sind seit 1. September 2008 durch das Inkrafttreten der Verordnung (EG) Nr. 396/2005 in allen europäischen Mitgliedsstaaten harmonisiert. Weltweit einheitliche Grenzwerte gibt es jedoch nicht. Einige Handelsketten (Händler) fordern von ihren Produzenten pflanzliche Lebensmittel mit Pflanzenschutzmittel-Rückständen, die (deutlich) unterhalb der gesetzlichen Bestimmungen liegen. Dabei können die Forderungen einzelner Handelsketten voneinander variieren.

Pflanzenschutzmittel-Rückstände können beispielsweise in Laboren bestimmt und quantifiziert werden. Es gibt zahlreiche Dienstleister, die Pflanzenschutzmittel-Rückstände in Lebens- und Futtermitteln im Auftrag bestimmen. Die Dokumente CN 112 150 300 A, EP 3 346 822 A1, WO 2020/137085 A1 und WO 2018/050580 A1 beschreiben bekannte Pflanzenschutzsprüheinrichtungen.

Für einen Erzeuger von pflanzlichen Lebensmitteln und Futtermitteln wäre es vorteilhaft, bereits während des Anbaus der Pflanzen Informationen darüber zu erhalten, welche Mengen an Pflanzenschutzmittel-Rückständen in den geernteten Produkten zu erwarten sind, wenn der Erzeuger ein definiertes Pflanzenschutzmittel gemäß einem definierten Applikationsprogramm verwendet. Der Erzeuger wäre dann in der Lage, durch Änderungen des Pflanzenschutzmittels und/oder des Applikationsprogramms die Rückstandsmenge des Pflanzenschutzmittels in dem Ernteprodukt in gewissem Umfang zu steuern. Ferner wäre es für einen solchen Erzeuger vorteilhaft zu wissen, bei welchen Rückstandswerten welche Handelsketten seine Erzeugnisse abnehmen und an Endkunden weiterverkaufen würden

Diese Aufgabe wird durch die Gegenstände der unabhängigen Patentansprüche gelöst. Bevorzugte Ausführungsformen finden sich in den abhängigen Patentansprüchen, den Zeichnungen und in der vorliegenden Beschreibung.

Ein erster Gegenstand der vorliegenden Erfindung ist eine Vorrichtung umfassend

- eine Eingabeeinheit

- eine Steuer- und Berechnungseinheit und

- eine Ausgabeeinheit

wobei die Steuer- und Berechnungseinheit konfiguriert ist, die Eingabeeinheit zu veranlassen, folgende Eingabeinformationen zu empfangen und/oder zu ermitteln:

- angebaute Kulturpflanze,
- verwendetes Pflanzenschutzmittel,
- Zahl der Applikationen des Pflanzenschutzmittels und jeweils applizierte Mengen,
- Zeitspannen zwischen der Applikation / den Applikationen und dem Erntezeitpunkt,
- Informationen zur Biomasse der Kulturpflanze, die bei der Applikation / den Applikationen des Pflanzenschutzmittels jeweils vorgelegen hat,
- Umweltbedingungen während des Anbaus der Kulturpflanze, insbesondere bei und/oder nach der Applikation / den Applikationen des Pflanzenschutzmittels,

wobei die Steuer- und Berechnungseinheit konfiguriert ist, eine Menge eines Rückstands des Pflanzenschutzmittels in und/oder auf den zum menschlichen und/oder tierischen Verzehr gedachten Teilen der Kulturpflanze zum Erntezeitpunkt der Kulturpflanze anhand der Eingabeinformationen zu berechnen,

wobei die Steuer- und Berechnungseinheit konfiguriert ist, die Ausgabeeinheit zu veranlassen, Informationen zu der Menge des Rückstands auszugeben.

Ein weiterer Gegenstand der vorliegenden Erfindung ist ein computer-implementiertes Verfahren umfassend die Schritte:

- Empfangen und/oder Ermitteln von Eingabeinformationen durch ein Computersystem, wobei die Eingabeinformationen umfassen:

○ angebaute Kulturpflanze,
○ verwendetes Pflanzenschutzmittel,
○ Zahl der Applikationen des Pflanzenschutzmittels und jeweils applizierte Mengen,
○ Zeitspannen zwischen der Applikation / den Applikationen und dem Erntezeitpunkt,
○ Informationen zur Biomasse der Kulturpflanze, die bei der Applikation / den Applikationen des Pflanzenschutzmittels jeweils vorgelegen hat,
○ Umweltbedingungen während des Anbaus der Kulturpflanze, insbesondere bei und/oder nach der Applikation / den Applikationen des Pflanzenschutzmittels,

- Berechnen einer Menge eines Rückstands des Pflanzenschutzmittels in und/oder auf den zum menschlichen und/oder tierischen Verzehr gedachten Teilen der Kulturpflanze vorzugsweise zum Zeitpunkt der Ernte durch das Computersystem,
- Ausgeben einer Information zu der Menge des Rückstands über eine Ausgabeeinheit des Computersystems.

Ein weiterer Gegenstand der vorliegenden Erfindung ist ein System umfassend

- ein erstes Computersystem umfassend eine Eingabeeinheit, eine erste Steuer- und Berechnungseinheit, eine erste Sende- und Empfangseinheit und eine Ausgabeeinheit,

- ein zweites Computersystem umfassend eine zweite Steuer- und Berechnungseinheit und eine zweite Sende- und Empfangseinheit,

wobei die erste Steuer- und Berechnungseinheit konfiguriert ist, die Eingabeeinheit zu veranlassen, folgende Eingabeinformationen zu empfangen und/oder zu ermitteln:

○ angebaute Kulturpflanze,
○ verwendetes Pflanzenschutzmittel,
○ Zahl der Applikationen des Pflanzenschutzmittels und jeweils applizierte Mengen
○ Zeitspannen zwischen der Applikation / den Applikationen und dem Erntezeitpunkt,
○ optional: Informationen zur Biomasse der Kulturpflanze, die bei der Applikation / den Applikationen des Pflanzenschutzmittels jeweils vorgelegen hat,
○ optional: Umweltbedingungen während des Anbaus der Kulturpflanze, insbesondere bei und/oder nach der Applikation / den Applikationen des Pflanzenschutzmittels,

wobei die erste Steuer- und Berechnungseinheit konfiguriert ist, die erste Sende- und Empfangseinheit zu veranlassen, die Eingabeinformationen über ein Netzwerk an das zweite Computersystem zu übermitteln,

wobei die zweite Steuer- und Berechnungseinheit konfiguriert ist, die zweite Sende- und Empfangseinheit zu veranlassen, die Eingabeinformationen über das Netzwerk zu empfangen,

wobei die zweite Steuer- und Berechnungseinheit konfiguriert ist, folgende Informationen zu ermitteln, für den Fall, dass die Informationen nicht bereits von dem ersten Computersystem übermittelt wurden:

○ Informationen zur Biomasse der Kulturpflanze, die bei der Applikation / den Applikationen des Pflanzenschutzmittels jeweils vorgelegen hat und/oder

○ Umweltbedingungen während des Anbaus der Kulturpflanze, insbesondere bei und/oder nach der Applikation / den Applikationen des Pflanzenschutzmittels,

wobei die zweite Steuer- und Berechnungseinheit konfiguriert ist, eine Menge eines Rückstands des Pflanzenschutzmittels in und/oder auf den zum menschlichen und/oder tierischen Verzehr gedachten Teilen der Kulturpflanze vorzugsweise zum Zeitpunkt der Ernte auf Basis der Eingabeinformationen zu berechnen,

wobei die zweite Steuer- und Berechnungseinheit konfiguriert ist, die zweite Sende- und Empfangseinheit zu veranlassen, die Menge des Rückstands über das Netzwerk an das erste Computersystem zu übermitteln,

wobei die erste Steuer- und Berechnungseinheit konfiguriert ist, die erste Sende- und Empfangseinheit zu veranlassen, die Menge des Rückstands über das Netzwerk zu empfangen,

wobei die erste Steuer- und Berechnungseinheit konfiguriert ist, die Ausgabeeinheit zu veranlassen Informationen zu der Menge des Rückstands gegenüber einem Nutzer auszugeben.

Ein weiterer Gegenstand der vorliegenden Erfindung ist ein Computerprogrammprodukt umfassend einen Datenträger und Programmcode, der auf dem Datenträger gespeichert ist und der ein Computersystem, in dessen Arbeitsspeicher der Programmcode geladen ist, dazu veranlasst, die folgenden Schritte auszuführen:

- Empfangen und/oder Ermitteln folgender Eingabeinformationen:

∘ angebaute Kulturpflanze,
∘ verwendetes Pflanzenschutzmittel,
∘ Zahl der Applikationen des Pflanzenschutzmittels und jeweils applizierte Mengen,
∘ Zeitspannen zwischen der Applikation / den Applikationen und dem Erntezeitpunkt,
∘ Informationen zur Biomasse der Kulturpflanze, die bei der Applikation / den Applikationen des Pflanzenschutzmittels jeweils vorgelegen hat,
∘ Umweltbedingungen während des Anbaus der Kulturpflanze, insbesondere bei und/oder nach der Applikation / den Applikationen des Pflanzenschutzmittels,

- Berechnen einer Menge eines Rückstands des Pflanzenschutzmittels in und/oder auf den zum menschlichen und/oder tierischen Verzehr gedachten Teilen der Kulturpflanze vorzugsweise zum Zeitpunkt der Ernte der Kulturpflanze anhand der Eingabeinformationen,

- Ausgeben von Informationen zu der Menge des Rückstands.

Die Erfindung wird nachstehend näher erläutert, ohne zwischen den Erfindungsgegenständen (Verfahren, Vorrichtung, System, Computerprogrammprodukt) zu unterscheiden. Die nachfolgenden Erläuterungen sollen vielmehr für alle Erfindungsgegenstände in analoger Weise gelten, unabhängig davon, in welchem Kontext (Verfahren, Vorrichtung, System, Computerprogrammprodukt) sie erfolgen.

Wenn in der vorliegenden Beschreibung oder in den Patentansprüchen Schritte in einer Reihenfolge genannt werden, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden können; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen dar.

Die vorliegende Erfindung wird mit Hilfe eines Computersystems oder mehrerer Computersysteme ausgeführt.

Ein "Computersystem" ist ein System zur elektronischen Datenverarbeitung, das mittels programmierbarer Rechenvorschriften Daten verarbeitet. Ein solches System umfasst üblicherweise einen "Computer", diejenige Einheit, die einen Prozessor zur Durchführung logischer Operationen umfasst, sowie eine Peripherie.

Als "Peripherie" bezeichnet man in der Computertechnik alle Geräte, die an den Computer angeschlossen sind, und zur Steuerung des Computers und/oder als Ein- und Ausgabegeräte dienen. Beispiele hierfür sind Monitor (Bildschirm), Drucker, Scanner, Maus, Tastatur, Laufwerke, Kamera, Mikrofon, Lautsprecher etc. Auch interne Anschlüsse und Erweiterungskarten gelten in der Computertechnik als Peripherie.

Computersysteme von heute werden häufig in Desktop-PCs, Portable PCs, Laptops, Notebooks, Netbooks und Tablet-PCs und so genannte Handhelds (z.B. Smartphone) unterteilt; alle diese Geräte können zur Ausführung der Erfindung genutzt werden.

Die Eingaben in den Computer erfolgen über Eingabemittel wie beispielsweise eine Tastatur, eine Maus, ein Mikrofon, einen Netzwerkanschluss, einen externen Datenspeicher und/oder dergleichen. Als Eingabe soll auch die Auswahl eines Eintrags aus einem virtuellen Menü oder einer virtuellen Liste oder das Anklicken eines Auswahlkästchens und dergleichen durch einen Nutzer des erfindungsgemäßen Computersystems verstanden werden. Ausgaben erfolgen üblicherweise über einen Bildschirm (Monitor), auf einem Drucker, über Lautsprecher und/oder durch Speicherung auf einem Datenspeicher.

Die erfindungsgemäße Vorrichtung kann als ein solches Computersystem ausgeführt sein. Ferner kann das erfindungsgemäße System mehrere solcher Computersysteme umfassen.

Die vorliegende Erfindung dient der Vorhersage der Rückstandsmenge eines Pflanzenschutzmittels in und/oder auf den zum menschlichen und/oder tierischen Verzehr gedachten Teilen einer Kulturpflanze vorzugsweise zum Zeitpunkt der Ernte.

Die Vorhersage wird für eine spezifische Kulturpflanze getroffen. Unter dem Begriff "Kulturpflanze" wird eine Pflanze verstanden, die durch das Eingreifen der Menschen zielgerichtet als Nutzpflanze angebaut wird. Zum Beispiel können Teile der angebauten Kulturpflanze zum menschlichen und/oder tierischen Verzehr geeignet sein. In einer bevorzugten Ausführungsform handelt es sich bei der Kulturpflanze um eine Obstpflanze oder eine Gemüsepflanze.

Vorzugsweise handelt es sich bei der Kulturpflanze um eine der in der folgenden Enzyklopädie aufgeführten Pflanzen: Christopher Cumo: Encyclopedia of Cultivated Plants: From Acacia to Zinnia, Band 1 bis 3, ABC-CLIO, 2013, ISBN 9781598847758.

Die Kulturpflanze ist besonders vorzugsweise ausgewählt aus der folgenden Liste: Erdbeere, Tomate, Gurke, Paprika, Radies, Rettich, Kohlrabi, Möhre, Sellerie, Fenchel, Patinake, Erbse, Bohne, Spargel, Spinat, Mangold, Artischocke, Schwarzwurzel, Kopfsalat, Eissalat, Schnittsalat, Endivie, Cicorée, Aubergine, Kürbis, Zucchini, Feldsalat, Zuckerrübe, Rhabarber, Weißkohl, Rotkohl, Grünkohl, Rosenkohl, Blumenkohl, Broccoli, Himbeere, Brombeere, Heidelbeere, Holunder, Kirsche, Apfel, Birne, Weintraube, Pflaume, Mirabelle, Pfirsich, Aprikose, Melone, Stachelbeere.

Die Vorhersage erfolgt auf Basis von Informationen, die die Kulturpflanze, das Pflanzenschutzmittel und Anbaubedingungen (näher) spezifizieren. Diese Informationen werden in dieser Beschreibung auch als "Eingabeinformationen" bezeichnet. Dabei soll der Begriff "Eingabeinformationen" nicht dahingehend verstanden werden, dass diese Informationen sämtlich von einem Nutzer in das erfindungsgemäße Computersystem eingeben werden. Vielmehr kann ein Teil der Eingabeinformationen auch von dem erfindungsgemäßen Computersystem (auf Basis von eingegebenen Informationen) ermittelt werden (wie nachfolgend näher erläutert wird). Insofern bezieht sich der Begriff "Eingabe" eher darauf, dass die Eingabeinformationen als Eingabe in die Berechnung einer Menge eines Rückstands eines Pflanzenschutzmittels einfließen.

In der vorliegenden Beschreibung wird ferner der Begriff "Spezifizieren" verwendet. Je nachdem, auf welche Weise ein Gegenstand "spezifiziert" wird, kann der Begriff "Spezifizieren" die Bedeutungen "Eingeben", "Ermitteln", "Auswählen (=Selektieren)", "Vorselektieren", "Berechnen" und/oder "Ableiten" haben.

In einem ersten Schritt wird die Kulturpflanze spezifiziert. Dies erfolgt vorzugsweise dadurch, dass ein Nutzer den Namen der Kulturpflanze oder den Namen der Sorte der Kulturpflanze oder einen Code für die Kulturpflanze/Kulturpflanzensorte (z.B. nach dem Internationalen Code der Nomenklatur der Kulturpflanzen, kurz ICNCP) in das erfindungsgemäße Computersystem eingibt oder die entsprechende Information zu der Kulturpflanze aus einer Liste oder einem Menü auswählt oder eine Kulturpflanze anhand einer bildhaften Darstellung der Kulturpflanze (z.B.: einem Foto oder eine Grafik) auswählt.

Denkbar ist auch, dass die Kulturpflanze oder das Gefäß, in dem sich die Kulturpflanze befindet, oder ein Beet, in dem die Kulturpflanze angebaut wird, oder ein Katalog, in dem die Kulturpflanze aufgeführt ist, oder eine Verpackung für die Kulturpflanze oder für Saatgut zum Anbau der Kulturpflanze mit einem maschinenlesbaren Code ausgestattet ist, der eine Information zu der Kulturpflanze bereitstellt. Die Spezifizierung der Kulturpflanze kann in einem solchen Fall darin bestehen, dass der maschinenlesbare Code mit einem geeigneten Lesegerät ausgelesen und die ausgelesene Information zu der Kulturpflanze mittels des Lesegeräts an das erfindungsgemäße Computersystem übertragen wird. Bei einem solchen maschinenlesbaren Code kann es sich beispielsweise um einen optoelektronisch lesbaren Code (z.B. Strichcode, 2D-Code (z.B. DataMatrix- oder QR-Code) oder um einen elektronisch in einem Halbleiterspeicher (z.B. einem RFID-Chip) gespeicherten Code handeln.

Denkbar ist auch, dass das erfindungsgemäße Computerprogrammprodukt lediglich für eine einzige Kulturpflanze bestimmt ist, das heißt, lediglich die Menge eines Rückstands eines Pflanzenschutzmittels für eine einzige Kulturpflanze oder Kulturpflanzensorte berechnen/vorhersagen kann. In einem solchen Fall besteht der Schritt "Spezifizieren einer Kulturpflanze" darin, dass ein Nutzer das entsprechende Computerprogrammprodukt auswählt, um Rückstandsmengen eines oder mehrerer Pflanzenschutzmittel in der Kulturpflanze, für die das Computerprogramm bestimmt ist, zu berechnen.

In einem weiteren Schritt können Informationen zum Anbau der Kulturpflanze (in dieser Beschreibung auch als Anbauparameter oder Anbaubedingungen bezeichnet) spezifiziert werden.

Die Anbauparameter können angeben, wo und/oder unter welchen Bedingungen die Kulturpflanze angebaut wird. Es kann zum Beispiel spezifiziert werden, ob die Kulturpflanze im Freien, in einem Folientunnel (wie zum Beispiel bei Erdbeeren praktiziert), in einem Gewächshaus oder dergleichen angebaut werden. Durch den weitgehend fehlenden Witterungseinfluss (z.B. Regen) können Rückstandsmengen bei Pflanzen, die im Gewächshaus kultiviert werden, höher als bei einer Kultivierung im Freiland sein.

Es kann spezifiziert werden, ob eine künstliche Bewässerung erfolgt, ggf. können die Bewässerungsmengen spezifiziert werden.

Insbesondere für den Fall, dass es sich um ein Gewächshaus handelt, kann der Nutzer vorzugsweise die Bedingungen, die im Gewächshaus herrschen, spezifizieren, wie beispielsweise die Temperatur (Luft, Boden), Feuchtigkeit (Luft, Boden) sowie Kohlendioxidgehalt in der Luft, zum Beispiel in Form eines zeitlichen Verlaufs über den Tag / die Nacht, Maximalwert, Minimalwert, Mittelwert (z.B. arithmetischer Mittelwert (Durchschnitt)), Varianz, Temperatursummen, Strahlungssummen und/oder dergleichen.

Die oben genannten Bedingungen (Temperaturen, Feuchtigkeit, Kohlendioxidgehalt, Strahlungsmengen) können natürlich auch für Kulturpflanzen spezifiziert werden, die auf dem freien Feld oder in einem Folientunnel angebaut werden. Diese Bedingungen werden in dieser Beschreibung auch als Umweltbedingungen bezeichnet. Vorzugsweise wird die Witterung während der Vegetationsperiode der Kulturpflanze erfasst. Dabei können folgende Werte erfasst werden: Lufttemperatur, Luftfeuchtigkeit, Luftdruck, Windgeschwindigkeit, Niederschlagsart, Niederschlagsmenge, Sonneneinstrahlung und/oder dergleichen. Dabei können zum Beispiel Tageshöchst-, Tagestiefst- und/oder Tagesmittelwerte (z.B. arithmetische Mittelwerte) erfasst werden. Die Witterungsverhältnisse können auf der einen Seite einen Einfluss auf das Abbauverhalten eines Wirkstoffs ausüben und auf der anderen Seite das Wachstumsverhalten der Kulturpflanzen (die Biomasse zum Zeitpunkt der Applikation eines Pflanzenschutzmittels) bestimmen.

Vorzugsweise wird die geografische Position des Feldes spezifiziert, auf dem die Kulturpflanze angebaut wird. Anhand der geografischen Position des Feldes können dann Werte für die genannten Umweltbedingungen, die während der Anbauperiode herrschen (aktuelle gemessene und/oder vorhergesagte Werte) oder üblicherweise herrschen (Mittelwerte der Vergangenheit) z.B. aus Datenbanken ausgelesen werden. Es ist aber auch denkbar, dass lediglich eine geografische Position eines Feldes spezifiziert und in einem Modell des maschinellen Lernens verwendet wird, um eine Beziehung zwischen der geografischen Position und der berechneten Rückstandsmenge zu lernen.

Unter dem Begriff "Feld" wird ein räumlich abgrenzbarer Bereich der Erdoberfläche verstanden, der landwirtschaftlich genutzt wird, indem auf einem solchen Feld Kulturpflanzen angepflanzt, mit Nährstoffen versorgt und geerntet werden.

Die Spezifizierung der geografischen Position eines Feldes kann beispielsweise darin bestehen, dass dasjenige Land spezifiziert ist, in dem sich das Feld befindet. Es ist auch denkbar, dass eine Region spezifiziert wird, in der sich das Feld befindet. Bei einer solchen Region kann es sich zum Beispiel um eine Region mit einem definierten Klima handeln, das sich von dem Klima benachbarter Regionen unterscheidet. Bei einer Region kann es sich um ein Anbaugebiet für eine spezifische Kulturpflanze handeln (zur Definition eines Anbaugebietes siehe z.B. Journal für Kulturpflanzen, 61 (7). S. 247-253, 2009, ISSN 0027-7479). Bei einer Region kann es sich um einen Boden-KlimaRaum handeln (zur Definition eines Boden-Klima-Raumes siehe z.B. Nachrichtenbl. Deut. Pflanzenschutzd., 59(7), S. 155-161, 2007, ISSN 0027-7479).

Die Spezifizierung der geografischen Position eines Feldes kann ferner darin bestehen, dass die geografischen Koordinaten (Geokoordinaten) mindestens eines Punktes, der in dem Feld liegt oder am Rande des Feldes liegt, angegeben werden. Viele Felder weisen die Form eines Polygons auf. Für ein solches Feld können zur Spezifizierung die Geokoordinaten der Ecken des Polygons angeben werden. Es ist denkbar, dass ein Nutzer zur Spezifizierung der geografischen Position eines Feldes die Feldgrenzen auf einer virtuellen Karte, die auf einem Bildschirm des erfindungsgemäßen Computersystems angezeigt wird, mit einem Finger oder einem Eingabegerät (z.B. mit einer Maus) einzeichnet.

Es ist denkbar, dass für eine oder mehrere Kulturpflanzen bereits Informationen zum Anbau (z.B. übliche Anbaubedingungen) in einem Datenspeicher hinterlegt sind. Es ist denkbar, dass die erfindungsgemäße Vorrichtung oder das erfindungsgemäße System nach dem Spezifizieren einer Kulturpflanze die für die Kulturpflanze üblichen Anbaubedingungen aus dem Datenspeicher ausliest und die ausgelesenen Werte der weiteren Berechnung der Rückstandsmenge zugrunde legt. Es ist ferner denkbar, dass die Anbaubedingungen durch Spezifizieren der Position festgelegt werden; für definierte Länder und/oder Regionen können in dem Datenspeicher übliche Anbaubedingungen gespeichert sein, die der weiteren Berechnung zugrunde gelegt werden können. Es ist auch denkbar, dass das erfindungsgemäße Computerprogrammprodukt lediglich für eine einzige Kulturpflanze bestimmt ist, die unter vorgegebenen Anbaubedingungen angebaut wird. In einem solchen Fall besteht der Schritt "Spezifizieren der Anbaubedingungen" darin, dass ein Nutzer das entsprechende Computerprogrammprodukt auswählt.

Es ist denkbar, dass das Computersystem konfiguriert ist, bei Kenntnis der geographischen Lage des Feldes, auf dem die Kulturpflanze angebaut wird, aus einer Datenbank, z.B. über ein Netzwerk, Informationen zu dem Klima und/oder Wetter in der Region, in der sich das Feld befindet, ermittelt.

Diese Informationen zum Klima und/oder Wetter können dann zur Ermittlung der Rückstandsmenge und/oder zum Wachstum der Kulturpflanze verwendet werden.

In einem nächsten Schritt wird mindestens ein Pflanzenschutzmittel spezifiziert, das beim Anbau der spezifizierten Kulturpflanze zum Einsatz kommt, d.h. appliziert wird.

Unter dem Begriff "Pflanzenschutzmittel" wird ein Mittel verstanden, das dazu dient, Pflanzen oder Pflanzenerzeugnisse vor Schadorganismen zu schützen oder deren Einwirkung vorzubeugen, unerwünschte Pflanzen oder Pflanzenteile zu vernichten, ein unerwünschtes Wachstum von Pflanzen zu hemmen oder einem solchen Wachstum vorzubeugen, und/oder in einer anderen Weise als Nährstoffe die Lebensvorgänge von Pflanzen zu beeinflussen (z.B. Wachstumsregler). Besagte Wachstumsregler dienen zum Beispiel der Erhöhung der Standfestigkeit bei Getreide durch Verkürzung der Halmlänge (Halmverkürzer oder besser Internodienverkürzer), Verbesserung der Bewurzelung von Stecklingen, Verringerung der Pflanzenhöhe durch Stauchung im Gartenbau oder der Verhinderung der Keimung von Kartoffeln. Wachstumsregler sind üblicherweise Phytohormone oder deren synthetischen Analoge. Beispiele für weitere Pflanzenschutzmittel sind Herbizide, Fungizide und andere Pestizide (z.B. Insektizide, Nematizide, Molluskizide und dergleichen).

Ein Pflanzenschutzmittel enthält üblicherweise einen Wirkstoff oder mehrere Wirkstoffe. Als "Wirkstoffe" werden Substanzen bezeichnet, die in einem Organismus eine spezifische Wirkung haben und eine spezifische Reaktion hervorrufen. Bei einem solchen Wirkstoff kann es sich um einen synthetisch hergestellten (chemischen) Wirkstoff oder einen aus einem Organismus gewonnenen (biologischen) Wirkstoff handeln. Auch Kombinationen sind denkbar. Üblicherweise enthält ein Pflanzenschutzmittel einen Trägerstoff zum Verdünnen des einen oder der mehreren Wirkstoffe. Daneben sind Additive wie Konservierungsmittel, Puffer, Farbstoffe und dergleichen denkbar. Ein Pflanzenschutzmittel kann fest, flüssig oder gasförmig vorliegen.

Unter einem "Schadorganismus" wird ein Organismus verstanden, der beim Anbau von Kulturpflanzen in Erscheinung treten und die Kulturpflanze schädigen, die Ernte der Kulturpflanze negativ beeinflussen oder mit der Kulturpflanze um natürliche Ressourcen konkurrieren kann. Beispiele für derartige Schadorganismen sind Unkräuter, Ungräser, tierische Schädlinge wie beispielsweise Käfer, Raupen und Würmer, Pilze und Krankheitserreger (z.B. Bakterien und Viren). Auch wenn Viren aus biologischer Sicht nicht zu den Organismen zählen, sollen sie in dieser Beschreibung dennoch unter den Begriff Schadorganismus fallen.

Unter dem Begriff "Unkraut" (Mehrzahl: Unkräuter) werden Pflanzen der spontanen Begleitvegetation in Kulturpflanzenbeständen, Grünland oder Gartenanlagen verstanden, die dort nicht gezielt angebaut werden und z.B. aus dem Samenpotential des Bodens oder über Zuflug zur Entwicklung kommen. Der Begriff ist nicht auf Kräuter im eigentlichen Sinne beschränkt, sondern umfasst auch Gräser, Farne, Moose oder holzige Pflanzen. Im Bereich des Pflanzenschutzes wird häufig auch der Begriff "Ungras" (Mehrzahl: Ungräser) benutzt, um eine Abgrenzung zu den krautigen Pflanzen zu verdeutlichen. Im vorliegenden Text wird der Begriff Unkraut als Oberbegriff verwendet, der Ungras miterfassen soll, es sei denn, es wird auf spezifische Unkräuter oder Ungräser Bezug genommen.

Unter dem Begriff "Bekämpfung" werden eine Verhinderung des Befalls eines Feldes / einer Kulturpflanze oder eines Teils davon mit einem oder mehreren Schadorganismen und/oder eine Verhinderung der Ausbreitung von einem oder mehreren Schadorganismen und/oder eine Reduzierung der Menge an vorhandenen Schadorganismen verstanden.

Die Spezifizierung eines Pflanzenschutzmittels ist aus zwei Gründen wichtig: Zum einen wird/werden durch die Spezifizierung des Pflanzenschutzmittels auch der Stoff/die Stoffe spezifiziert, dessen/deren Rückstandsmenge(n) erfindungsgemäß vorhergesagt werden soll(en). Bei dem Stoff, für den eine Rückstandsmenge vorhergesagt werden soll, handelt es sich üblicherweise um den Wirkstoff des Pflanzenschutzmittels und/oder um ein Abbauprodukt des Wirkstoffs, das (ebenfalls) eine biologische Wirkung in einem Organismus ausüben kann. Zum anderen wird das Abbauverhalten (und damit auch die Rückstandsmenge) maßgeblich durch die chemische Struktur des Wirkstoffs und ggf. seine Formulierung in dem Pflanzenschutzmittel bestimmt. Für viele Wirkstoffe liegen Modelle zum Abbauverhalten vor (siehe z.B. Environ. Sci. Technol. 2019, 53, 5838-5847; Soulas, G. & Lagacherie, B. Biol Fertil Soils (2001) 33: 551. https://doi.org/10.1007/s003740100363; Beulke, S. & Brown, C.D. Biol Fertil Soils (2001) 33: 558. https://doi.org/10.1007/s003740100364; Pagel, Holge, et al., Biogeochemistry, vol. 117, 2014, pp. 185-204., www.jstor.org/stable/24716853; https://www.epa.gov/pesticide-science-and-assessingpesticide-risks/guidance-calculate-representative-half-life-values).

Oftmals liegt ein exponentieller Abbau vor; das heißt, die Menge an ausgebrachtem Wirkstoff nimmt exponentiell mit der Zeit ab. Ferner bestimmen die physikalisch-chemischen Eigenschaften des Wirkstoffes, in welchem Ausmaß der Wirkstoff über das Leitungsbahnensystem der Pflanzen in essbare Anteile transportiert wird.

Die Spezifizierung eines Pflanzenschutzmittels kann beispielsweise auf Basis des Produktnamens des Pflanzenschutzmittels oder eines anderen Namens oder der chemischen Formel für einen Wirkstoff, der in dem Pflanzenschutzmittel enthalten ist, erfolgen.

Denkbar ist auch, dass ein Pflanzenschutzmittel anhand eines Namens und/oder einer bildhaften Darstellung (z.B. einem Foto des Produkts) aus einer Liste ausgewählt wird.

Denkbar ist auch, dass die Verpackung des Pflanzenschutzmittels einen maschinenlesbaren Code enthält, der Informationen zu dem Pflanzenschutzmittel bereitstellt und der durch ein geeignetes Lesegerät ausgelesen werden kann. Bei dem maschinenlesbaren Code kann es sich, wie bereits oben beschrieben, um einen optoelektronisch lesbaren Code und/oder einen elektronisch in einem Halbleiterspeicher (z.B. eines RFID-Tags) gespeicherten Code handeln.

Es ist denkbar, dass mehrere Pflanzenschutzmittel spezifiziert werden, die gleichzeitig oder zu verschiedenen Zeitpunkten appliziert werden/werden sollen.

Denkbar ist auch, dass das erfindungsgemäße Computerprogrammprodukt lediglich für ein einziges Pflanzenschutzmittel bestimmt ist, das heißt, lediglich die Menge eines Rückstands eines spezifischen Pflanzenschutzmittels berechnen/vorhersagen kann. In einem solchen Fall besteht der Schritt "Spezifizieren eines Pflanzenschutzmittels" darin, dass ein Nutzer das entsprechende Computerprogrammprodukt auswählt, um Rückstandsmengen desjenigen Pflanzenschutzmittels in einer Kulturpflanze zu ermitteln, für das das Computerprogramm bestimmt ist.

Vorzugsweise sind die erfindungsgemäße Vorrichtung und das erfindungsgemäße System so konfiguriert, dass sie auf Basis der Information zur angebauten Kulturpflanze und/oder auf Basis der Information zur geografischen Position des Feldes und/oder auf Basis der Anbaubedingungen, eine Vorauswahl für das mindestens eine Pflanzenschutzmittel treffen. Der Begriff "Vorauswahl" im Zusammenhang mit einem Pflanzenschutzmittel bedeutet, dass von der Vorrichtung / dem System aus einer Liste an Pflanzenschutzmitteln diejenigen Pflanzenschutzmittel selektiert und dem Nutzer angezeigt werden, die üblicherweise bei der spezifizierten Kulturpflanze verwendet werden und/oder üblicherweise zur Bekämpfung von Schadorganismen verwendet werden, die bei der spezifizierten Kulturpflanze auftreten können, und/oder es werden diejenigen Pflanzenschutzmittel selektiert, die gegen Schadorganismen wirken, die unter den Bedingungen, die an der geografischen Position des spezifizierten Feldes oder in dem Gewächshaus herrschen, in Erscheinung treten können. Unter den vorselektierten Pflanzenschutzmitteln kann dann ein Nutzer eines (oder mehrere) auswählen, für das (die) eine Berechnung einer Rückstandsmenge erfolgen soll. Denkbar ist auch, dass bei der Vorselektion nur ein Pflanzenschutzmittel in Frage kommt, welches dann gegenüber einem Nutzer angezeigt werden kann.

Je nach der geografischen Position, die für das Feld spezifiziert worden ist, kann die Liste an vorselektierten Pflanzenschutzmitteln variieren. Vorzugsweise sind die erfindungsgemäße Vorrichtung und das erfindungsgemäße System so konfiguriert, dass sie lediglich diejenigen Pflanzenschutzmittel vorselektieren und anzeigen, für die in dem Land, in dem sich das jeweilige Feld befindet, eine behördliche Zulassung für das Ausbringen besteht. Entsprechende Informationen zu behördlichen Zulassungen können in einer oder mehreren Datenbanken gespeichert sein, zu der das erfindungsgemäße Computersystem einen Zugriff z.B. über eine Netzwerkverbindung haben kann.

In einem weiteren Schritt kann die Applikation des Pflanzenschutzmittels vorzugsweise anhand von Applikationsparametern (näher) spezifiziert werden. Zu den Applikationsparametern zählen beispielsweise die Art der Behandlung, die Aufwandmenge und mindestens ein Zeitpunkt oder mindestens eine Zeitspanne, zu dem / in der das Pflanzenschutzmittel in der spezifizierten Menge appliziert wird/werden soll und/oder wurde. Je früher in der Vegetationsperiode der Nutzpflanze eine Behandlung erfolgt, desto geringer ist üblicherweise die Menge der Rückstände.

Dabei ist es denkbar, dass während einer Vegetationsperiode mehrfach (zu unterschiedlichen Zeitpunkten oder in unterschiedlichen Zeitspannen) Pflanzenschutzmittel appliziert wird. Bei einer Mehrfachanwendung können Anzahl der Anwendungen und der zeitliche Abstand zwischen den Anwendungen spezifiziert werden. Die Aufwandmengen können bei einer mehrfachen Ausbringung gleich sein oder variieren. Auch die Art der Behandlung und/oder das jeweils verwendete Pflanzenschutzmittel können variieren. Von großer Bedeutung ist die Zeitspanne zwischen der letzten Applikation eines Pflanzenschutzmittels und der Ernte: im Regelfall werden Pflanzenschutzmittel-Rückstände mit der Zeit abgebaut; je länger also der Zeitpunkt der letzten Applikation her ist, desto geringer ist im Regelfall die Rückstandsmenge.

Vorzugsweise wird die Anzahl der Applikationen des Pflanzenschutzmittels und die jeweils applizierte Menge spezifiziert. Vorzugsweise werden die Zeitspannen zwischen der Applikation / den Applikationen und dem Erntezeitpunkt spezifiziert.

Die jeweils applizierte Menge kann beispielsweise in Form der Aufwandmenge angegeben werden.

Die "Aufwandmenge" ist die zur Bekämpfung von Schadorganismen notwendige Menge eines Pflanzenschutzmittels, die üblicherweise pro Fläche (beim Ausbringen auf dem Feld), pro Raumeinheit (z. B. im Gewächshaus) oder pro Saatgutmenge (z.B. bei der Beizung) angegeben wird. Die Menge kann in Form des Gewichts (z.B. kg) oder in Form des Volumens (z.B. L) angegeben sein. Die Menge kann sich auf die Gesamtmenge des Pflanzenschutzmittel-Produkts oder auf den in dem Pflanzenschutzmittel-Produkt befindlichen Wirkstoff beziehen. Je größer die ausgebrachte Wirkstoffmenge auf einer Fläche ist, umso höher ist tendenziell auch die Rückstandsmenge im/auf/am Erntegut.

Falls Wasser zur Verdünnung eines Pflanzenschutzmittels eingesetzt wird, kann auch die Menge des verwendeten Wassers spezifiziert werden.

Es ist denkbar, dass die Art der Behandlung der Kulturpflanze mit dem Pflanzenschutzmittel spezifiziert wird. Bei der Spezifizierung der Art der Behandlung kann beispielsweise angegeben werden, ob es sich um eine Behandlung des Saatguts oder der Pflanze in einem definierten Entwicklungsstadium handelt. Behandlungen direkt auf das Erntegut führen im Normalfall zu höheren Rückstandsmengen als beispielsweise Saatgutbehandlungen vor der Aussaat. Ferner kann angegeben werden, welche Pflanzenteile behandeln werden (z.B. Blätter, Früchte und/oder Wurzeln) oder ob eine Bodenbehandlung stattfindet.

Die Applikationsparameter können von einem Nutzer in die erfindungsgemäße Vorrichtung oder das erfindungsgemäße System eingegeben werden. Ferner können die Applikationsparameter ganz oder teilweise von der erfindungsmäßen Vorrichtung oder dem erfindungsgemäßen System unter Verwendung der bereits eingegebenen Informationen zur Kulturpflanze, zur geografischen Position des Feldes, zu den Anbaubedingungen, und/oder zum Pflanzenschutzmittel ermittelt werden.

Denkbar ist zum Beispiel, dass für ein Pflanzenschutzmittel von dem Hersteller oder Vertreiber des Pflanzenschutzmittels Informationen bereitgestellt wurden, wann und in welchen Mengen das Pflanzenschutzmittel appliziert werden sollte. Diese Informationen können in einem internen oder externen Datenspeicher, auf den die erfindungsgemäße Vorrichtung / das erfindungsgemäße System zugreifen kann, gespeichert sein. Die Vorrichtung / das System kann also konfiguriert sein, auf Basis der vorliegenden Informationen einen Vorschlag zu generieren, wann das Pflanzenschutzmittel in welchen Mengen ausgebracht werden sollte. Der Nutzer kann diesen Vorschlag dann übernehmen oder ändern. Die übernommenen und/oder geänderten Daten können dann zur Berechnung der Rückstandsmenge verwendet werden.

Zeitpunkte / Zeitspannen, zu denen / in denen Pflanzenschutzmittel appliziert werden, können sich beispielsweise (auch) an dem Entwicklungsstadium der Kulturpflanze orientieren. Das Entwicklungsstadium einer Pflanze kann beispielsweise in Form des so genannten BBCH-Codes angegeben werden. Die Abkürzung BBCH steht für die **B**iologische Bundesanstalt, das **B**undessortenamt und die **CH**emische Industrie. Die erweiterte BBCH-Skala zur einheitlichen Kodierung der phänologischen Entwicklungsstadien mono- und dikotyler Pflanzen ist eine Gemeinschaftsarbeit der Biologischen Bundesanstalt für Land- und Forstwirtschaft (BBA), des Bundessortenamtes (BSA), des Industrieverbandes Agrar (IVA) und des Instituts für Gemüse u. Zierpflanzenbau Großbeeren/Erfurt. Es ist denkbar, dass ein Nutzer den (erweiterten) BBCH-Code für die angebaute Kulturpflanze in die Vorrichtung / das System eingibt. Denkbar ist ferner, dass die Vorrichtung / das System konfiguriert ist, den BBCH-Code selbst zu berechnen. Es ist beispielsweise denkbar, dass der Nutzer den Zeitpunkt der Anpflanzung / der Aussaat der Kulturpflanze in die Vorrichtung / das System eingegeben hat und die Vorrichtung / das System den BBCH-Code unter Nutzung des Zeitpunkts für die Anpflanzung / die Aussaat berechnet.

Weitere Informationen, die in die Berechnung der Rückstandsmenge einfließen, sind vorzugsweise Informationen zur Biomasse der Kulturpflanze, die bei der Applikation / den Applikationen des Pflanzenschutzmittels jeweils vorgelegen hat. Wird eine definierte Auftragsmenge eines Pflanzenschutzmittels appliziert, so verteilt sie sich im Idealfall gleichmäßig auf die vorliegende Biomasse. Mit anderen Worten: je mehr Biomasse einer definierten Auftragsmenge gegenübersteht, desto geringer ist der Anteil des Pflanzenschutzmittels pro Kilogramm Kulturpflanze (in Form von Früchten und/oder Blättern und/oder anderen Pflanzenbestandteilen). Für die Berechnung der Rückstandsmenge gilt es also, eine Menge an vorliegenden Kulturpflanzen zu ermitteln, auf die sich eine spezifizierte Pflanzenschutzmittelmenge verteilt.

Die Informationen zur Biomasse der Kulturpflanze, die bei der Applikation / den Applikationen jeweils vorgelegen hat, kann eine Angabe zur tatsächlichen Masse der vorgelegenen Kulturpflanze sein - es kann aber auch eine mit der Biomasse korrelierende Information sein wie beispielsweise die Höhe der Kulturpflanze zum Zeitpunkt einer Applikation, die Ausdehnung der Kulturpflanze parallel zur Erdoberfläche, die Größe von Pflanzenteilen wie beispielsweise von Blättern und/oder Früchten, die Fruchtmasse, der Durchmesser von Früchten und/oder dergleichen. Die Informationen zur Biomasse sind vorzugsweise Durchschnittswerte, z.B. die arithmetischen Mittelwerte über einen Pflanzenbestand einer Fläche eines Feldes oder einer Teilfläche eines Feldes.

In einer bevorzugten Ausführungsform ist die Information zur Biomasse der Kulturpflanze die durchschnittliche Höhe der Kulturpflanzen in einem Pflanzenbestand. In einer weiteren bevorzugten Ausführungsform ist die Information zur Biomasse der Kulturpflanze der durchschnittliche Durchmesser und/oder das Volumen von Früchten in einem Pflanzenbestand. In einer weiteren bevorzugten Ausführungsform ist die Information zur Biomasse der Kulturpflanze der Anteil an Pflanzen, der, von oben (in Richtung Erdmittelpunkt) betrachtet, den Erdboden (z.B. eine Ackerfläche) bedeckt. In einer weiteren bevorzugten Ausführungsform ist die Information zur Biomasse der Kulturpflanze die mittlere Größe der Fläche der Blätter eines Pflanzenbestands. In einer weiteren bevorzugten Ausführungsform ist die Information zur Biomasse der Kulturpflanze ein Vegetationsindex wie beispielsweise der normierte differenzierte Vegetationsindex (engl.: *normalized difference ve-*

*getation index* oder auch *normalized density vegetation index* NDVI). Es ist auch denkbar, dass die Information zur Biomasse der Kulturpflanze eine Kombination der genannten und/oder weiterer Größen/Parameter ist.

Es ist auch denkbar, dass die Information zur Biomasse der Kulturpflanze anhand des Entwicklungsstadiums der Kulturpflanze spezifiziert wird. Das Entwicklungsstadium kann beispielsweise durch einen Nutzer spezifiziert werden oder durch die erfindungsgemäße Vorrichtung / das erfindungsgemäße Computersystem z.B. mit Hilfe eines Pflanzenwachstumsmodells berechnet werden. Denkbar ist ferner, dass die Information zur Biomasse der Kulturpflanze direkt mit Hilfe eines Pflanzenwachstumsmodells berechnet wird.

Bei einem solchen Pflanzenwachstumsmodell kann es sich beispielsweise um ein mathematisches Modell handeln, welches das Wachstum einer Pflanze in Abhängigkeit von intrinsischen (Genetik) und/oder extrinsischen (Umwelt) Faktoren beschreibt. Einen Überblick über die Erstellung von Pflanzenwachstumsmodellen bieten beispielsweise die Fachbücher i) "Mathematische Modellbildung und Simulation" von Marco Günther und Kai Velten, erschienen im Wiley-VCH Verlag im Oktober 2014 (ISBN: 978-3-527-41217-4), sowie ii) "Working with Dynamic Crop Models" von Daniel Wallach, David Makowski, James W. Jones und Francois Brun., erschienen 2014 in Academic Press (Elsevier), USA.

Pflanzenwachstumsmodelle existieren für eine Vielzahl an Kulturpflanzen. Das Pflanzenwachstumsmodell simuliert üblicherweise das Wachstum eines Bestands an Kulturpflanzen über einen definierten Zeitraum. Denkbar ist auch, ein Modell auf Basis einer einzelnen Pflanze zu verwenden, das die Energie- und Stoffflüsse in den einzelnen Organen der Pflanze simuliert. Es sind zudem Mischmodelle verwendbar.

Das Wachstum einer Kulturpflanze wird neben den genetischen Merkmalen der Pflanze vornehmlich durch die über die Lebensdauer der Pflanze herrschenden lokalen Witterungen (Quantität und spektrale Verteilung der einfallenden Sonnenstrahlen, Temperaturverläufe, Niederschlagsmengen, Windeintrag), dem Zustand des Bodens sowie das Nährstoffangebot bestimmt.

Auch die bereits (in der Vergangenheit) erfolgten Kulturmaßnahmen und ein etwaig aufgetretener Befall mit Schadorganismen können einen Einfluss auf das Pflanzenwachstum ausüben und können in dem Wachstumsmodell berücksichtigt werden.

Die Pflanzenwachstumsmodelle sind in der Regel (i.d.R.) sogenannte dynamische prozessbasierte Modelle (s. "Working with Dynamic Crop Models" von Daniel Wallach, David Makowski, James W. Jones und Francois Brun., erschienen 2014 in Academic Press (Elsevier), USA), können aber auch gänzlich oder teilweise regelbasiert oder statistisch bzw. datengestützt/empirisch sein. Die Modelle sind i.d.R. sogenannte Punktmodelle. Hierbei werden die Modelle i.d.R. so kalibriert, dass der Output die räumliche Repräsentanz des Inputs widerspiegelt. Ist der Input an einem Punkt im Raum erhoben oder wird für einen Punkt im Raum interpoliert oder geschätzt, so wird i.d.R. angenommen, dass der Modelloutput für das gesamte angrenzende Feld gültig ist. Eine Anwendung von auf Feldebene kalibrierten sog. Punktmodellen auf weitere, i.d.R. gröbere Skalen ist bekannt (siehe z.B.: H. Hoffmann et al.: Impact of spatial soil and climate input data aggregation on regional yield simulations. PLoS ONE 11(4): e0151782. doi:10.1371/journal.pone.0151782). Eine Anwendung dieser sogenannten Punktmodelle auf mehrere Punkte innerhalb eines Feldes ermöglicht hierbei eine teilflächenspezifische Modellierung. Hierbei werden allerdings räumliche Abhängigkeiten vernachlässigt, z.B. im Bodenwasserhaushalt. Andererseits existieren auch Systeme zur zeitlich-räumlich expliziten Modellierung. Dabei werden räumliche Abhängigkeiten berücksichtigt.

Beispiele für dynamische, prozessbasierte Pflanzenwachstumsmodelle sind Apsim, Lintul, Epic, Hermes, Monica, STICS u.a. Ein Vergleich der Modelle und entsprechende Literatur zu den Modellen kann z.B. der folgenden Veröffentlichung und den darin aufgeführten Verweisen entnommen werden: H. Hoffmann et al.: Impact of spatial soil and climate input data aggregation on regional yield simulations. PLoS ONE 11(4): e0151782. doi: 10. 1371/journal.pone.0151782.

In die Modellierung des Pflanzenwachstums können folgende Parameter einfließen:

(a) Wetter: tägliche Niederschlagssummen, Strahlungssummen, Tagesminimum und Tagesmaximum der Lufttemperatur sowie Temperatur in Bodennähe sowie Bodentemperatur, Windgeschwindigkeit, u.a.
(b) Boden: Bodentyp, Bodentextur, Bodenart, Feldkapazität, Permanenter Welkepunkt, Organischer Kohlenstoff, mineralischer Stickstoffgehalt, Lagerungsdichte, Van-Genuchten-Parameter, u.a.
(c) Kulturpflanze: Art, Sorte, sortenspezifische Parameter wie z.B. Spezifischer Blattflächenindex, Temperatursummen, maximale Wurzeltiefe, u.a.
(d) Kulturmaßnahmen: Saatgut, Aussaattermin, Aussaatdichte, Aussaattiefe, Düngemittel, Düngemenge, Anzahl an Düngeterminen, Düngetermin, Bodenbearbeitung, Ernterückstände, Fruchtfolge, Distanz zum Feld gleicher Kultur im Vorjahr, Bewässerung, u.a.

Mit Hilfe eines Pflanzenwachstumsmodells kann auch die zu einem Zeitpunkt vorhandene Menge an Biomasse und/oder die Größe der Blattfläche und/oder die Menge an Früchten (Fruchtmasse) und/oder die Zahl vorhandener Triebe und/oder dergleichen berechnet werden. Es ist denkbar, dass eine Pflanze mit mehr Biomasse und/oder einer größeren Blattfläche eine größere Menge an Pflanzenschutzmittel benötigt als eine Pflanze mit weniger Biomasse und/oder einer geringeren Blattfläche. Es ist denkbar, dass die Menge an vorhandener Biomasse - insbesondere in Form von Früchten - zum Zeitpunkt der Applikation eines Pflanzenschutzmittels einen Einfluss auf die Rückstandsmenge ausübt. In einer bevorzugten Ausführungsform der vorliegenden Erfindung fließt daher auch die zu einem Zeitpunkt (insbesondere zum Zeitpunkt der Applikation eines Pflanzenschutzmittels) vorhandene Menge an Biomasse der angebauten Kulturpflanze in die Berechnung einer Rückstandsmenge ein.

Zur Ermittlung und/oder Vorhersage der Menge an vorliegender Biomasse und/oder zur Optimierung von Pflanzenwachstumsmodellen können auch Fernerkundungsdaten hinzugezogen werden. "Fernerkundungsdaten" sind digitale Informationen, die aus der Ferne beispielsweise durch Satelliten von der Erdoberfläche gewonnen wurden. Auch der Einsatz von Luftfahrzeugen (unbemannt (Drohnen) oder bemannt) zur Aufnahme von Fernerkundungsdaten ist denkbar. Durch die Fernerkundungssensoren werden digitale Abbildungen von Bereichen der Erdoberfläche erzeugt, aus denen Informationen über die dort herrschende Vegetation und/oder die dort herrschenden Umweltbedingungen gewonnen werden können (siehe z.B. M. S. Moran et al.: Opportunities and Limitations for Image-Based Remote Sensing in Precision Crop Management, Remote Sensing of Environment (1997) 61: 319-346). Die Daten dieser Sensoren werden über die vom Anbieter zur Verfügung gestellten Schnittstellen bezogen und können optische und elektromagnetische (z.B. Synthetic Aperture Radar SAR) Datensätze verschiedener Verarbeitungsstufen umfassen.

Es können ferner Sensoren im Feld eingesetzt werden, um das Entwicklungsstadium und/oder die vorhandene Biomasse der Kulturpflanzen zu bestimmen. Die Sensoren können stationär im Feld positioniert sein; denkbar ist auch die Ausstattung von Landmaschinen und/oder Robotern, die sich durch das Feld bewegen, mit entsprechenden Sensoren.

Zeitpunkte / Zeitspannen, zu denen / in denen Pflanzenschutzmittel appliziert werden, können sich an den Entwicklungsstadien und/oder der Ausbreitung von Schadorganismen orientieren. Auch für die Entwicklung und/oder Ausbreitung von Schadorganismen sind Vorhersagemodelle verfügbar (siehe z.B.: WO2017/222722A1, WO2018/058821A1, US20020016676, US20180018414A1, WO2018/099220A1). Mit Hilfe solcher Modelle können Zeitpunkte vorhergesagt werden, zu denen ein hohes Risiko eines Befalls der Kulturpflanzen mit Schadorganismen herrschen. Eine Bekämpfung der Schadorganismen mit einem Pflanzenschutzmittel wird vorzugsweise dann vorgenommen, wenn das (errechnete) Risiko eines Befalls besonders hoch ist (zum Beispiel einen definierten Schwellenwert überschreitet). Auch die Modelle zur Vorhersage eines Befalls mit einem Schadorganismus verwenden üblicherweise Wetterdaten und historische Daten.

In einer bevorzugten Ausführungsform erfolgt die Vorhersage der Rückstandsmenge auf Basis der folgenden Eingabeinformationen: angebaute Kulturpflanze, Land oder Region, in der die Kulturpflanze angebaut wird oder Menge der vorliegenden Biomasse und/oder Fruchtmasse der angebauten Kulturpflanze zum Zeitpunkt der Applikation des Pflanzenschutzmittels (oder eine damit korrelierende Größe wie beispielsweise der Durchmesser einer Pflanze oder einer Frucht), zu verwendendes oder verwendetes Pflanzenschutzmittel, Aufwandmenge des zu verwendenden oder verwendeten Pflanzenschutzmittels und Länge der Zeitspanne zwischen dem Zeitpunkt der Applikation und dem Zeitpunkt der Ernte. Besonders vorteilhaft ist es, wenn neben den genannten Eingabeinformationen noch ein oder mehrere der folgenden weiteren Eingabeinformationen zur Witterung während der Anbauphase in die Berechnung einfließen: Sonneneinstrahlung (z.B. in Form von Sonnenstunden), Feuchtigkeit und/oder Temperatur.

In einer bevorzugten Ausführungsform erfolgt die Berechnung der Rückstandsmenge auf Basis der folgenden Eingabeinformationen:

- angebaute Kulturpflanze
- verwendetes Pflanzenschutzmittel
- Zahl der Applikationen mit dem Pflanzenschutzmittel und jeweils applizierte Mengen
- Zeitspanne zwischen der letzten Applikation und dem Erntezeitpunkt
- durchschnittliche Luft- und/oder Bodentemperatur an den jeweiligen Tagen der Applikationen
- durchschnittliche Luftfeuchte an den jeweiligen Tagen der Applikationen
- akkumulierte Strahlungsenergie (Sonnenstrahlung oder künstliche Beleuchtung) an den jeweiligen Tagen der Applikationen
- durchschnittlicher Durchmesser und/oder durchschnittliche Höhe der angebauten Kulturpflanzen an den jeweiligen Applikationstagen.

In einer weiteren bevorzugten Ausführungsform erfolgt die Berechnung der Rückstandsmenge auf Basis der folgenden Eingabeinformationen:

- angebaute Kulturpflanze
- verwendetes Pflanzenschutzmittel
- Zahl der Applikationen mit dem Pflanzenschutzmittel und jeweils applizierte Mengen
- Zeitspanne zwischen der letzten Applikation und dem Erntezeitpunkt
- geografische Position mindestens eines Punktes des Feldes, auf dem die Kulturpflanze angebaut wird, oder eine Angabe über einen Anbau der Kulturpflanze in einem Gewächshaus
- optional eine Angabe, ob die Kulturpflanze in einem Folientunnel angebaut wird
- durchschnittlicher Durchmesser und/oder durchschnittliche Höhe der angebauten Kulturpflanzen und/oder durchschnittliches Volumen von Früchten und/oder durchschnittliche Fruchtmasse an den jeweiligen Applikationstagen.

Die erfindungsgemäße Vorrichtung und das erfindungsgemäße System sind konfiguriert, auf Basis der vorliegenden Informationen (Eingabeinformationen, von den Eingabeinformationen abgeleitete (z.B. berechnete) Informationen und/oder anhand von Eingabeinformationen, die aus einem oder mehreren Datenspeicher(n) ausgelesen werden) die Menge mindestens eines Rückstands eines Pflanzenschutzmittels in und/oder auf der Kulturpflanze oder in und/oder auf einem Teil der Kulturpflanze vorzugsweise zum Zeitpunkt der Ernte zu berechnen. Falls es nach der Ernte (z.B. während einer Lagerung, durch eine Waschung und/oder dergleichen) noch zu einer signifikanten Reduzierung der Rückstandsmenge kommt, kann die Rückstandsmenge (auch) für einen anderen Zeitpunkt als den Zeitpunkt der Ernte berechnet werden und/oder für einen Zustand nach einer spezifischen Behandlung berechnet werden (beispielsweise Waschung, Aussetzen von elektromagnetischer Strahlung, Wärme- oder Kältebehandlung und/oder dergleichen).

Die Berechnung der Menge des mindestens einen Rückstands kann beispielsweise auf Basis von empirisch ermittelten Daten zur Verteilung von Pflanzenschutzmittel in Teilen der Kulturpflanze und zum Abbau von Pflanzenschutzmitteln erfolgen.

In einer besonders bevorzugten Ausführungsform erfolgt die Berechnung der Menge des mindestens einen Rückstands eines Pflanzenschutzmittels mit Hilfe einer Hybridmodellierung. Das bedeutet, dass dem Abbau des Pflanzenschutzmittels eine mathematische Funktion zugrunde gelegt wird, deren Parameter mit Hilfe eines Modells des maschinellen Lernens auf Basis der Eingabedaten ermittelt werden. Dieser Ansatz wird nachfolgend anhand eines Beispiels erläutert, ohne die Erfindung auf dieses Beispiel zu beschränken.

Wie bereits erwähnt, kann der Abbau über die Zeit von vielen Pflanzenschutzmitteln durch eine exponentielle Abnahme angenähert werden. Eine solche exponentielle Abnahme kann durch die folgende mathematische Funktionsgleichung beschrieben werden:

$$N(t) = N_0 \cdot e^{-\frac{t}{\tau}}$$

Dabei ist $N(t)$ die zweitabhängige Menge an Pflanzenschutzmittel in, an und/oder auf den zum menschlichen und/oder tierischen Verzehr gedachten Teilen der Kulturpflanze, $t$ gibt die Zeit an, $N_0$ ist die Menge an Pflanzenschutzmittel zum Zeitpunkt $t=0$ und $\tau$ ist die Zeitspanne, in der die Größe $N$ jeweils auf das 1/e-fache (etwa 37%) abfällt.

Sind die Parameter Anfangsmenge $N_0$ und Zeitkonstante $\tau$ bekannt, lässt sich für jeden Zeitpunkt $t$ die Menge $N(t)$ an Pflanzenschutzmittel berechnen, z.B. für den Zeitpunkt der Ernte der Kulturpflanze.

Gemäß der vorliegenden Erfindung werden die Parameter der mathematischen Funktionsgleichung (im vorliegenden bevorzugten Beispiel Anfangsmenge $N_0$ und Zeitkonstante $\tau$) mittels eines Modells des maschinellen Lernens ermittelt. Dieser Ansatz hat den Vorteil, dass kein Wissen erforderlich ist, wie die einzelnen Eingabeinformationen die Rückstandsmenge beeinflussen. Stattdessen wird ein Modell des maschinellen Lernens verwendet, dass die Beziehungen zwischen den Eingabeinformationen und der Rückstandsmenge anhand von zahlreichen Beispielen lernt.

Das Modell des maschinellen Lernens berechnet aus den Eingabeinformationen die Parameter der mathematischen Funktionsgleichung. Das Modell des maschinellen Lernens kann beispielsweise in einem überwachten Lernverfahren (engl. *supervised training*) anhand von Trainingsdaten trainiert werden, eine Beziehung zwischen den Eingabeinformationen (Input) und den Parametern der mathematischen Funktionsgleichung zu lernen. Das Gelernte kann dann zur Vorhersage auf neue Daten (Eingabeinformationen) übertragen werden. Die Trainingsdaten können empirisch ermittelt werden und umfassen paarweise Input- und Output-Daten. Die Input-Daten repräsentieren die Eingabeinformationen, üblicherweise in Form eines Merkmalvektors. Die Output-Daten repräsentieren die Parameter der mathematischen Funktionsgleichung, die anhand von gemessenen Rückstandsmengen ermittelt werden können.

Mit anderen Worten: es kann für eine Vielzahl an Kulturpflanzen, Anbaubedingungen, Umweltbedingungen, Pflanzenschutzmitteln und/oder Applikationsbedingungen empirisch ermittelt werden, welche Pflanzenschutzmittel-Rückstandsmengen sich beispielsweise zum Erntezeitpunkt ergeben. Aus diesen empirisch gewonnenen Daten lassen sich die Parameter der mathematischen Funktionsgleichung, die die zeitliche Abnahme des Pflanzenschutzmittels beschreibt, ermitteln. Schließlich wird das Modell des maschinellen Lernens trainiert, die Eingabeinformationen (üblicherweise in Form eines Merkmalvektors) auf die Parameter der mathematischen Funktionsgleichung abzubilden. Es ist nicht notwendig, den konkreten Einfluss einzelner Eingabeinformationen auf die Rückstandsmenge zu untersuchen und zu verstehen.

Generell gilt, dass ein Merkmalvektor (engl.: *feature vector*) die (vorzugsweise numerisch) parametrisierbaren Eigenschaften (Merkmale) eines Objekts (im vorliegenden Fall die Eingabeinformationen) in vektorieller Weise zusammenfasst. Verschiedene, für das Objekt charakteristische Merkmale bilden die verschiedenen Dimensionen dieses Vektors Die Gesamtheit der möglichen Merkmalvektoren nennt man den Merkmalsraum. Viele Algorithmen beim maschinellen Lernen erfordern eine numerische Repräsentation von Objekten, da solche Repräsentationen die Verarbeitung der Daten und die statistische Analyse erleichtern oder überhaupt erst ermöglichen. Die Erzeugung des Merkmalvektors dient also dazu, die ermittelten und/oder empfangenen Eingabeinformationen in eine Form zu bringen, die eine computergestützte Verarbeitung ermöglichen. Beispiele zur Erzeugung von Merkmalvektoren sind im Stand der Technik zu finden (siehe z.B. J. Frochte: Maschinelles Lernen, 2. Aufl., Hanser-Verlag 2019, ISBN: 978-3-446-45996-0).

Bei dem Modell des maschinellen Lernens kann es sich beispielsweise um ein künstliches neuronales Netz handeln.

Ein solches künstliches neuronales Netzwerk umfasst mindestens drei Schichten von Verarbeitungselementen: eine erste Schicht mit Eingangsneuronen (Knoten), eine n-te Schicht mit mindestens einem Ausgangsneuron (Knoten) und $n$-2 innere Schichten, wobei $n$ eine natürliche Zahl und größer als 2 ist.

Die Eingangsneuronen dienen zum Empfangen der Werte des Merkmalvektors der Eingabeinformationen. In einem solchen Netzwerk dient das mindestens eine Ausgangsneuron dazu, mindestens einen Parameter der mathematischen Funktionsgleichung auszugeben. Die Verarbeitungselemente der Schichten zwischen den Eingangsneuronen und dem mindestens einen Ausgangsneuron sind in einem vorbestimmten Muster mit vorbestimmten Verbindungsgewichten miteinander verbunden.

Das Trainieren des neuronalen Netzes kann beispielsweise mittels eines Backpropagation-Verfahrens durchgeführt werden. Dabei wird für das Netz eine möglichst zuverlässige Abbildung von gegebenen Eingabevektoren auf gegebene Ausgabevektoren angestrebt. Die Qualität der Abbildung wird durch eine Fehlerfunktion beschrieben. Das Ziel ist die Minimierung der Fehlerfunktion. Das Einlernen eines künstlichen neuronalen Netzes erfolgt bei dem Backpropagation-Verfahren durch die Änderung der Verbindungsgewichte.

Im trainierten Zustand enthalten die Verbindungsgewichte zwischen den Verarbeitungselementen Informationen bezüglich der Beziehung zwischen den Eingabeinformationen (in Form des Merkmalvektors) und dem mindestens einen Parameter der mathematischen Funktionsgleichung, die die zeitliche Abnahme des Pflanzenschutzmittels beschreibt.

Eine Kreuzvalidierungsmethode kann verwendet werden, um die Daten in Trainings- und Validierungsdatensätze aufzuteilen. Der Trainingsdatensatz wird beim Backpropagation-Training der Netzwerkgewichte verwendet. Der Validierungsdatensatz wird verwendet, um die Vorhersagegenauigkeit des trainierten Netzwerks zu ermitteln.

Details zur Erzeugung und zum Trainieren künstlicher neuronaler Netze sind beispielsweise beschrieben in: G. Ciaburro et al.: Neural Networks with R, Packt Publishing 2017, ISBN: 978-1-78839-787-2; T. Rashid: Make Your Own Neural Network, O'Reilly 2016, ISBN: 978-1530826605.

Die ermittelte Menge des Rückstands kann gegenüber einem Nutzer ausgegeben werden. Die Ausgabe erfolgt beispielsweise in Form von Text und/oder Ziffern und/oder Grafiken auf einem Monitor (Bildschirm) und/oder Drucker der erfindungsgemäßen Vorrichtung / des erfindungsgemäßen Systems.

In einer bevorzugten Ausführungsform wird die ermittelte Rückstandsmenge mit einer Maximalmenge oder mit mehreren Maximalmengen verglichen. Die mindestens eine Maximalmenge ist zum Beispiel eine für das jeweilige Pflanzenschutzmittel behördlich zugelassene Höchstmenge eines Rückstands in einer Kulturpflanze.

Die mindestens eine Maximalmenge kann auch eine von einem Händler für das jeweilige Pflanzenschutzmittel geforderte Höchstmenge eines Rückstands in einer Kulturpflanze sein. Ein "Händler" im Sinne der vorliegenden Erfindung ist vorzugsweise eine natürliche oder juristische Person, die Kulturpflanzen oder Teile von Kulturpflanzen von einem Erzeuger oder Zwischenhändler ankauft und sie (z.B. an Endkunden (Verbraucher)) weiterverkauft.

Die mindestens eine Maximalmenge kann auch eine von einem Nutzer definierte Menge sein.

Die mindestens eine Maximalmenge kann in einem oder in mehreren Datenspeicher(n) gespeichert sein, auf die die erfindungsgemäße Vorrichtung und das erfindungsgemäße System zugreifen können.

In einer bevorzugten Ausführungsform wird dem Nutzer gegenüber angezeigt, inwieweit die ermittelte Rückstandsmenge eine oder mehrere Maximalmengen über- oder unterschreitet. Es ist denkbar, dass der Nutzer ein Land oder eine Region spezifiziert und dem Nutzer angezeigt wird, ob und/oder inwieweit die ermittelte Rückstandsmenge die für das spezifizierte Land oder die spezifizierte Region zugelassene Höchstmenge über- oder unterschreitet. Es ist denkbar, dass der Nutzer mehrere Länder/Regionen spezifizieren kann. Es ist denkbar, dass der Nutzer einen Händler spezifiziert und dem Nutzer angezeigt wird, ob und/oder inwieweit die ermittelte Rückstandsmenge die von dem spezifizierten Händler zugelassene Höchstmenge über- oder unterschreitet. Es ist denkbar, dass der Nutzer mehrere Händler spezifizieren kann.

In einer bevorzugten Ausführungsform erfolgt die Ausgabe der ermittelten Menge des Rückstands des Pflanzenschutzmittels in Form einer Prozentzahl und/oder in Form einer grafischen Darstellung der Prozentzahl, wobei die Prozentzahl den prozentualen Anteil der berechneten Rückstandsmenge an einer maximalen, vorzugsweise gesetzlich oder behördlich erlaubten Rückstandsmenge und/oder einer maximalen, von einem Händler vorgeschriebenen Rückstandsmenge angibt. In einer bevorzugten Ausführungsform kann der Nutzer ein Land / eine Region oder mehrere Länder/-Regionen auswählen und es wird ihm angezeigt, wie groß die errechnete Rückstandsmenge im Verhältnis zur maximalen, in dem Land / in der Region vorgeschriebenen Rückstandsmenge ist. In einer bevorzugten Ausführungsform kann der Nutzer einen oder mehrere Händler auswählen und es wird ihm angezeigt, wie groß die errechnete Rückstandsmenge im Verhältnis zur maximalen, von dem Händler vorgeschriebenen Rückstandsmenge ist.

In einer bevorzugten Ausführungsform wird die berechnete Rückstandsmenge auf die von einer Behörde vorgeschriebene maximale Rückstandsgrenze ("*maximum residue limit*", "*maximum residue level*", MRL) bezogen. Die maximale Rückstandsgrenze ist die maximal zulässige Rückstandskonzentration. In der EU ist beispielsweise die Europäische Arzneimittel-Agentur (EMA) dafür verantwortlich, Rückstandshöchstgehalte zu empfehlen, die nach ihrer Annahme durch die Europäische Kommission zu rechtsverbindlichen Standards für die Lebensmittelsicherheit werden.

Der Rückstandshöchstgehalt wird normalerweise durch wiederholte Feldversuche (in der Größenordnung von 10) ermittelt, bei denen die Ernte gemäß der guten landwirtschaftlichen Praxis (GAP) behandelt wurde und ein angemessenes Vorernteintervall oder eine angemessene Verweildauer verstrichen ist. Für viele Pestizide liegt der Rückstandshöchstgehalt an ihrer Nachweisgrenze ("*limit of detection*", LOD). Es wird häufig die Quantifizierungsgrenze ("*limit of quantification*", LOQ) anstelle der LOD verwendet. Als Faustregel gilt, dass der LOQ-Wert ungefähr das Zweifache des LOD-Werts beträgt. Für Stoffe, die in keinem der Anhänge der EU-Vorschriften enthalten sind, gilt normalerweise ein Standard-Rückstandshöchstgehalt von 0,01 mg / kg (siehe e.g. https://ec.europa.eu/food/plant/pesticides/max_residue_levels_en). Anstelle oder neben dem MRL-Wert kann die berechnete Rückstandsmenge auch in Bezug zu weiteren üblichen Größen gesetzt werden, wie beispielsweise ARfD, ADI und/oder TDI. Die akute Referenzdosis ("*acute reference dose*", ARfD) ist eine Schätzung der Menge eines Stoffes in Lebensmitteln oder Trinkwasser, die über einen kurzen Zeitraum, normalerweise während einer Mahlzeit oder eines Tages, ohne nennenswertes Gesundheitsrisiko für den Verbraucher aufgenommen werden kann. Die erlaubte Tagesdosis ("*acceptable daily intake*", ADI) bezeichnet die Dosis einer Substanz, die bei lebenslanger täglicher Einnahme als medizinisch unbedenklich betrachtet wird. Handelt es sich um ungewollte Verunreinigungen, spricht man auch von einer tolerierten Tagesdosis ("*tolerable daily intake*", TDI).

In einer bevorzugten Ausführungsform ist die erfindungsgemäße Vorrichtung / das erfindungsgemäße System so konfiguriert, dass zu definierten Zeitpunkten oder bei Eintreten definierter Ereignisse eine Aktualisierung der Berechnung der Rückstandsmenge erfolgt, die einer Änderung der Anbaubedingungen, des Pflanzenschutzmittels, von Umweltbedingungen und/oder der Applikationsparameter Rechnung trägt. Zum Beispiel kann eine erste Berechnung der Rückstandsmenge auf einem für das jeweilige Land oder für die jeweilige Region, in dem / in der die Kulturpflanze angebaut wird, typischem Klima basieren. Im Verlauf der Vegetationsperiode wird dann die Berechnung an die tatsächlich herrschenden Wetterbedingungen angepasst. In analoger Weise kann eine Aktualisierung der Berechnung auf Basis der tatsächlich durchgeführten Applikationen eines Pflanzenschutzmittels erfolgen. Ferner kann eine Aktualisierung auf Basis von Sensordaten (beispielsweise Fernerkundungsdaten und/oder Felddaten) erfolgen, wobei die Sensordaten beispielsweise Auskunft über den Entwicklungsstand der Kulturpflanze und/oder einen zu erwartenden Ernteertrag geben können. Ferner ist denkbar, dass eine erste Berechnung der Rückstandsmenge auf Basis von Wettervorhersagen erfolgt, während eine nachfolgende (aktualisierte) Berechnung der Rückstandsmenge auf Basis des tatsächlichen Wetters erfolgt.

In einer bevorzugten Ausführungsform ist die erfindungsgenmäße Vorrichtung / das erfindungsgemäße System so konfiguriert, dass der Nutzer das spezifizierte Pflanzenschutzmittel ändern kann und/oder die Applikationsparamater ändern kann, worauf die Menge eines Rückstands des Pflanzenschutzmittels neu berechnet und angezeigt wird. Dies ermöglicht dem Nutzer eine Planung. Er kann evaluieren, wie sich eine Änderung des Pflanzenschutzmittels und/oder der Applikationsparameter auf die Menge des Rückstands auswirkt.

In einer bevorzugten Ausführungsform ist die erfindungsgenmäße Vorrichtung / das erfindungsgemäße System konfiguriert, in Reaktion auf eine Eingabe des Nutzers zur Optimierung der Rückstandsmenge, das Pflanzenschutzmittel und/oder die Applikationsparameter so zu verändern, dass sich eine minimale Rückstandsmenge ergibt. Bei einer solchen Optimierung kann der Nutzer ggf. entscheiden, welche Parameter veränderbar und welche unveränderbar sind. Die Vorrichtung / das System ändert dann die veränderbaren Parameter, bis ein Minimum bei der Rückstandsmenge erreicht ist und gibt die geänderten Parameter sowie die berechnete (minimale) Rückstandsmenge gegenüber dem Nutzer aus. Verfahren zur mathematischen Optimierung können den zahlreichen Lehrbüchern zu diesem Thema entnommen werden (siehe z.B. Peter Gritzmann: Grundlagen der Mathematischen Optimierung, Springer Spektrum 2013, ISBN: 978-3-528-07290-2).

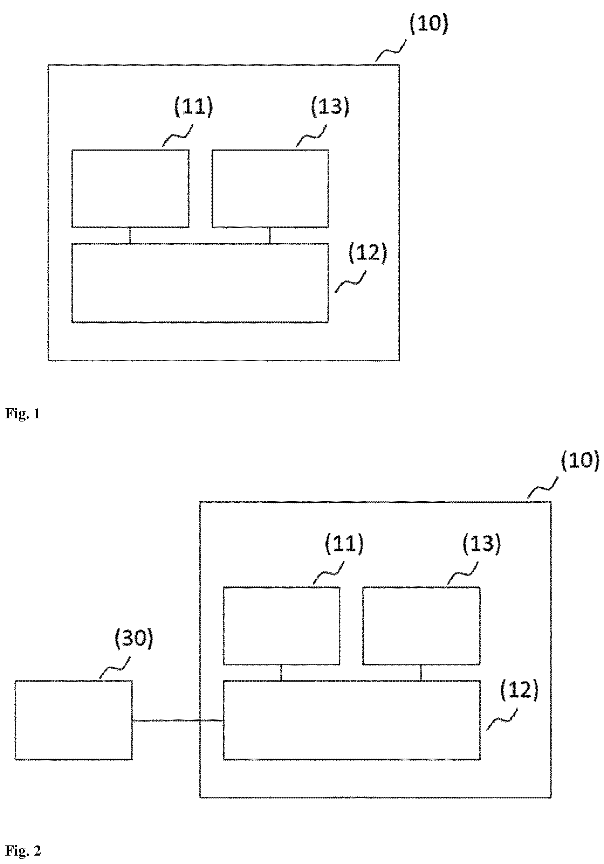

Fig. 1 zeigt beispielhaft und schematisch eine Ausführungsform der erfindungsgemäßen Vorrichtung. Die Vorrichtung (10) umfasst eine Eingabeeinheit (11), eine Steuer- und Berechnungseinheit (12) und eine Ausgabeeinheit (13). Über die Eingabeeinheit (11) kann ein Nutzer Informationen und Steuerbefehle in die Vorrichtung eingeben. Über die Ausgabeeinheit (13) können Informationen gegenüber einem Nutzer ausgegeben, vorzugsweise auf einem Monitor angezeigt werden. Die Steuer- und Berechnungseinheit (12) dient vornehmlich zur Steuerung der Komponenten der Vorrichtung (10), zur Prozessierung der eingegebenen und auszugebenden Informationen und zur Durchführung von Berechnungen und logischen Operationen.

Die Steuer- und Berechnungseinheit (12) ist konfiguriert,

- die Eingabeeinheit zu veranlassen, folgende Eingabeinformationen zu empfangen und/oder zu ermitteln:

　　◦ angebaute Kulturpflanze,
　　◦ verwendetes Pflanzenschutzmittel,
　　◦ Zahl der Applikationen des Pflanzenschutzmittels und jeweils applizierte Mengen,
　　◦ Zeitspannen zwischen der Applikation / den Applikationen und dem Erntezeitpunkt,
　　◦ Informationen zur Biomasse der Kulturpflanze, die bei der Applikation / den Applikationen des Pflanzenschutzmittels jeweils vorgelegen hat,
　　◦ Umweltbedingungen während des Anbaus der Kulturpflanze, insbesondere bei und/oder nach der Applikation / den Applikationen des Pflanzenschutzmittels,

- eine Menge eines Rückstands des Pflanzenschutzmittels in und/oder auf den zum menschlichen und/oder tierischen Verzehr gedachten Teilen der Kulturpflanze zum Erntezeitpunkt der Kulturpflanze anhand der Eingabeinformationen zu berechnen, und
- die Ausgabeeinheit zu veranlassen, Informationen zu der Menge des Rückstands auszugeben.

Fig. 2 zeigt beispielhaft und schematisch eine weitere Ausführungsform der erfindungsgemäßen Vorrichtung. Neben der Eingabeeinheit (11), der Steuer- und Berechnungseinheit (12) und der Ausgabeeinheit (13) wie in Bezug auf Fig. 1 beschrieben, ist die Vorrichtung (10) z.B. über ein Netzwerk mit einem Datenspeicher (30) verbunden. In dem Datenspeicher (30) können beispielsweise Informationen zu Kulturpflanzen (z.B. bevorzugte Anbaubedingungen), zu Pflanzenschutzmitteln (z.B. bevorzugte Applikationsparameter), zum Klima eines Landes oder einer Region, zum Wetter eines Landes oder einer Region, zur Ausbreitung von Schadorganismen in einem Land oder einer Region und/oder dergleichen gespeichert sein. Die Steuer- und Berechnungseinheit (12) kann konfiguriert sein, auf die in dem Datenspeicher (30) gespeicherten Informationen zuzugreifen und diese zur Berechnung der Menge des Rückstands eines Pflanzenschutzmittels zu verwenden. Ferner kann die Steuer- und Berechnungseinheit (12) konfiguriert sein, Informationen in dem Datenspeicher (30) zu speichern. Es ist denkbar, dass es sich bei dem Datenspeicher (30) um mehrere Datenspeicher handelt. In einem solchen Datenspeicher können auch ein oder mehrere Modelle gespeichert sein, die zur Berechnung von Rückstandsmengen eingesetzt werden können, wie beispielsweise Pflanzenwachstumsmodelle, Modelle zum Abbau von Pflanzenschutzmitteln und/oder dergleichen.

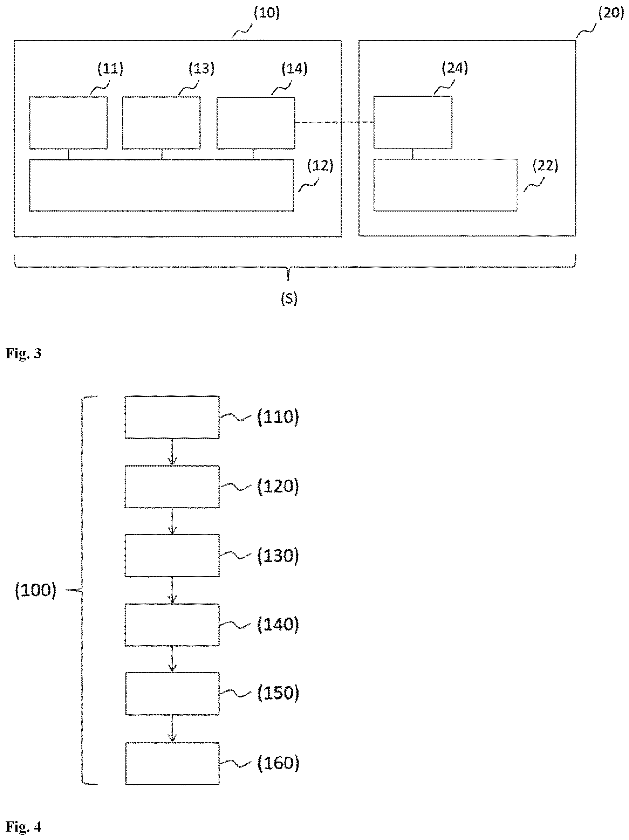

Fig. 3 zeigt beispielhaft und schematisch eine Ausführungsform des erfindungsgemäßen Systems. Das System (S) umfasst ein erstes Computersystem (10) und ein zweites Computersystem (20). Das erste Computersystem (10) ist vorzugsweise als ein Desktop-, Laptop- oder Tablet-Computer oder als ein Smartphone ausgeführt. Das zweite Computersystem (20) ist vorzugsweise als ein Server ausgeführt. Das erste Computersystem (10) wird von einem Nutzer bedient. Das erste Computersystem (10) dient als Kommunikationsschnittstelle zwischen dem Nutzer und dem System (S). Das zweite Computersystem (20) dient dazu, einige Funktionalitäten, die bei der erfindungsgemäßen Vorrichtung von der Steuer- und Berechnungseinheit der Vorrichtung ausgeführt werden, zu übernehmen. Gründe für die Verlagerung von Funktionalitäten auf ein zweites Computersystem können sein:

- Berechnungen benötigen eine hohe Rechenleistung; diese Berechnungen werden auf einen Server übertragen, der mit der entsprechenden Rechenleistung ausgestattet ist;
- Berechnungen sollen stets auf den neuesten Versionen von Modellen und aktuellen Daten basieren; diese neuesten Versionen von Modellen und aktuellen Daten werden über einen Server bereitgestellt.

Üblicherweise sind eine Vielzahl von ersten Computersystemen vorhanden, die von unterschiedlichen Nutzern bedient werden, und nur ein zweites Computersystem oder eine geringere (im Vergleich zur Zahl an ersten Computersystemen) Zahl an zweiten Computersystemen, das/die über ein Netzwerk oder mehrere Netzwerke Ressourcen (Rechenleistung, Daten, Modelle) für die Vielzahl an ersten Computersystemen bereitstellt/bereitstellen.

Das erste Computersystem (10) umfasst eine Eingabeeinheit (11), eine erste Steuer- und Berechnungseinheit (12), eine Ausgabeeinheit (13) und eine erste Sende- und Empfangseinheit (14). Das zweite Computersystem (20) umfasst eine zweite Steuer- und Berechnungseinheit (22) und eine zweite Sende- und Empfangseinheit (24). Das erste Computersystem (10) und das zweite Computersystem (20) können über ein Netzwerk Informationen austauschen (dargestellt durch die gestrichelte Linie zwischen der ersten Sende- und Empfangseinheit (14) des ersten Computersystems (10) und der zweiten Sende- und Empfangseinheit (24) des zweiten Computersystems (20)). Das Netzwerk kann ein mobiles Netzwerk umfassen, z.B. eines, das auf dem GSM-, GPRS-, 2G-, 3G-, LTE-, 4G-, 5G-Standard oder einem anderen Standard basiert.

Die erste Steuer- und Berechnungseinheit (12) ist konfiguriert, über die Eingabeeinheit (11) folgende Eingabeinformationen von einem Nutzer zu empfangen:

○ angebaute Kulturpflanze,
○ verwendetes Pflanzenschutzmittel,
○ Zahl der Applikationen des Pflanzenschutzmittels und jeweils applizierte Mengen
○ Zeitspannen zwischen der Applikation / den Applikationen und dem Erntezeitpunkt,
○ optional: Informationen zur Biomasse der Kulturpflanze, die bei der Applikation / den Applikationen des Pflanzenschutzmittels jeweils vorgelegen hat,
○ optional: Umweltbedingungen während des Anbaus der Kulturpflanze, insbesondere bei und/oder nach der Applikation / den Applikationen des Pflanzenschutzmittels,

Die erste Steuer- und Berechnungseinheit (12) ist konfiguriert, die erste Sende- und Empfangseinheit (14) zu veranlassen, die Eingabeinformationen über das Netzwerk an das zweite Computersystem (20) zu übermitteln.

Die zweite Steuer- und Berechnungseinheit (22) ist konfiguriert, die zweite Sende- und Empfangseinheit (24) zu veranlassen, die Eingabeinformationen über das Netzwerk zu empfangen.

Die zweite Steuer- und Berechnungseinheit (22) ist konfiguriert, folgende Informationen zu ermitteln, für den Fall dass die Informationen nicht bereits von dem ersten Computersystem (10) übermittelt wurden:

○ Informationen zur Biomasse der Kulturpflanze, die bei der Applikation / den Applikationen des Pflanzenschutzmittels jeweils vorgelegen hat und/oder

○ Umweltbedingungen während des Anbaus der Kulturpflanze, insbesondere bei und/oder nach der Applikation / den Applikationen des Pflanzenschutzmittels,

Diese weiteren Eingabeinformationen können beispielsweise aus einer oder mehreren Datenbanken, die mit dem zweiten Computersystem (20) über eine Netzwerkverbindung verbunden sein können, ausgelesen werden und/oder anhand von Eingabeinformationen, die von dem ersten Computersystem (10) übermittelt worden sind und/oder anhand von Informationen aus der einen oder den mehreren Datenbanken errechnet werden.

Die zweite Steuer- und Berechnungseinheit (22) ist konfiguriert, eine Menge eines Rückstands des Pflanzenschutzmittels in und/oder auf den zum menschlichen und/oder tierischen Verzehr gedachten Teilen der Kulturpflanze vorzugsweise zum Zeitpunkt der Ernte auf Basis der Eingabeinformationen zu berechnen.

Die zweite Steuer- und Berechnungseinheit (22) ist konfiguriert, die zweite Sende- und Empfangseinheit (24) zu veranlassen, die Menge des Rückstands über das Netzwerk an das erste Computersystem (10) zu übermitteln.

Die erste Steuer- und Berechnungseinheit (12) ist konfiguriert, die erste Sende- und Empfangseinheit (14) zu veranlassen, die Menge des Rückstands über das Netzwerk zu empfangen.

Die erste Steuer- und Berechnungseinheit (12) ist konfiguriert, die Ausgabeeinheit (13) zu veranlassen, die Menge des Rückstands gegenüber dem Nutzer auszugeben.

Das erfindungsgemäße System (S) kann einen oder mehrere Datenspeicher umfassen. Auf einem solchen Datenspeicher können Informationen zu Kulturpflanzen (z.B. bevorzugte Anbaubedingungen), zu Pflanzenschutzmitteln (z.B. bevorzugte Applikationsparameter), zum Klima eines Landes oder einer Region, zum Wetter eines Landes oder einer Region, zur Ausbreitung von Schadorganismen in einem Land oder einer Region und dergleichen gespeichert sein. Ein solcher Datenspeicher kann ein Bestandteil des ersten Computersystems (10), des zweiten Computersystems (20) und/oder eine separate Einheit sein, die mit dem ersten Computersystem (10) und/oder dem zweiten Computersystem (20) über ein Netzwerk verbunden sein kann.

Fig. 4 zeigt beispielhaft und schematisch in Form eines Ablaufdiagramms eine Ausführungsform des erfindungsgemäßen Verfahrens. Das Verfahren (100) umfasst die Schritte:

(110) Spezifizieren einer Kulturpflanze

(120) Spezifizieren von Anbauparametern zum Anbau der Kulturpflanze

(130) Spezifizieren eines Pflanzenschutzmittels

(140) Spezifizieren von Applikationsparametern zur Applikation des Pflanzenschutzmittels

(150) Berechnen einer Menge eines Rückstands des Pflanzenschutzmittels in und/oder auf den zum menschlichen und/oder tierischen Verzehr gedachten Teilen der Kulturpflanze vorzugsweise zum Zeitpunkt der Ernte

(160) Anzeigen der Menge des Rückstands gegenüber einem Nutzer.

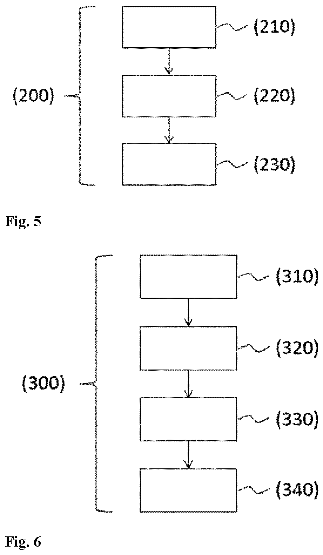

Fig. 5 zeigt beispielhaft und schematisch in Form eines Ablaufdiagramms die Schritte, die von einem Computersystem ausgeführt werden, auf dem das erfindungsgemäße Computerprogramm installiert ist. Die Schritte (200) umfassen:

(210) Empfangen und/oder Ermitteln folgender Informationen:

◦ angebaute Kulturpflanze,
◦ verwendetes Pflanzenschutzmittel,
◦ Zahl der Applikationen des Pflanzenschutzmittels und jeweils applizierte Mengen,
◦ Zeitspannen zwischen der Applikation / den Applikationen und dem Erntezeitpunkt,
◦ Informationen zur Biomasse der Kulturpflanze, die bei der Applikation / den Applikationen des Pflanzenschutzmittels jeweils vorgelegen hat,
◦ Umweltbedingungen während des Anbaus der Kulturpflanze, insbesondere bei und/oder nach der Applikation / den Applikationen des Pflanzenschutzmittels,

(220) Berechnen einer Menge eines Rückstands des Pflanzenschutzmittels in und/oder auf den zum menschlichen und/oder tierischen Verzehr gedachten Teilen der Kulturpflanze vorzugsweise zum Zeitpunkt der Ernte

(230) Anzeigen der Menge des Rückstands gegenüber einem Nutzer.

Fig. 6 zeigt beispielhaft und schematisch in Form eines Ablaufdiagramms die Schritte, die von einem Computersystem ausgeführt werden, auf dem eine bevorzugte Ausführungsform des erfindungsgemäßen Computerprogramms installiert ist. Die Schritte (300) umfassen:

(310) Empfangen folgender Eingabeinformationen von einem Nutzer:

◦ angebaute Kulturpflanze,
◦ verwendetes Pflanzenschutzmittel,
◦ Zahl der Applikationen des Pflanzenschutzmittels und jeweils applizierte Mengen,
◦ Zeitspannen zwischen der Applikation / den Applikationen und dem Erntezeitpunkt,
◦ optional: Informationen zur Biomasse der Kulturpflanze, die bei der Applikation / den Applikationen des Pflanzenschutzmittels jeweils vorgelegen hat,
◦ optional: Umweltbedingungen während des Anbaus der Kulturpflanze, insbesondere bei und/oder nach der Applikation / den Applikationen des Pflanzenschutzmittels,

(320) Übermitteln der Eingabeinformationen an ein zweites Computersystem

(330) Empfangen einer Menge eines Rückstands des Pflanzenschutzmittels in und/oder auf den zum menschlichen und/oder tierischen Verzehr gedachten Teilen der Kulturpflanze vorzugsweise zum Zeitpunkt der Ernte von dem zweiten Computersystem

(340) Anzeigen der Menge des Rückstands gegenüber einem Nutzer.

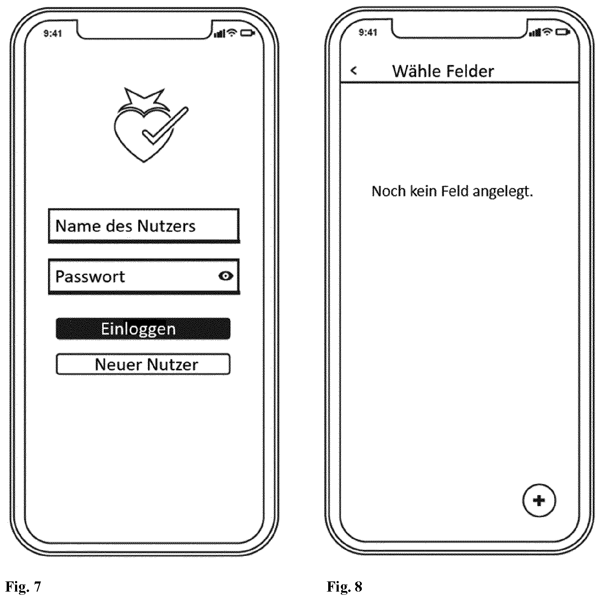

Fig. 7 bis Fig. 20 zeigen beispielhaft Anzeigen des erfindungsgemäßen Computerprogramms auf einem Bildschirm der erfindungsgemäßen Vorrichtung oder des erfindungsgemäßen Systems.

Fig. 7 zeigt beispielhaft eine Eingabemaske über die sich ein Nutzer mit seinem Namen (Name des Nutzes) und einem Passwort (Passwort) einloggen kann.

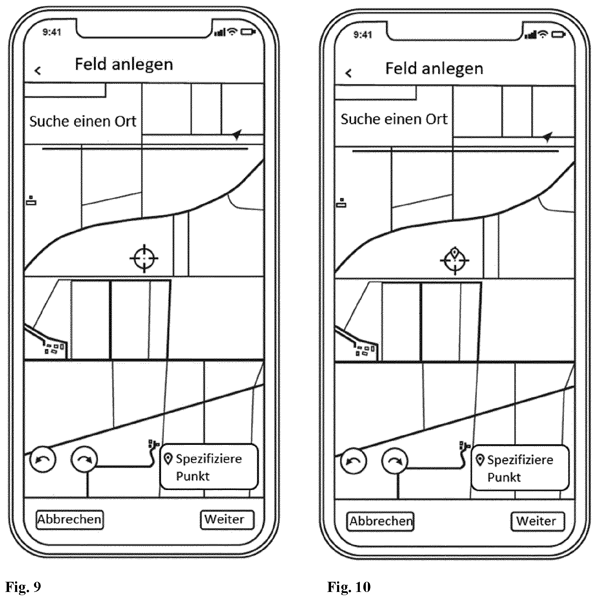

Nachdem sich der Nutzer eingeloggt hat, kann er aufgefordert werden, ein Feld, auf dem eine Kulturpflanze angebaut wird oder angebaut werden soll, zu spezifizieren. Fig. 8 zeigt eine Anzeige des erfindungsgemäßen Computerprogrammprodukts, die darauf hinweist, dass noch kein Feld spezifiziert ist ("Noch kein Feld angelegt"). Durch Klicken der virtuellen Schaltfläche mit dem ⊕-Zeichen kann ein Nutzer einen Prozess zum Spezifizieren eines neuen Feldes starten. Der Prozess ist beispielhaft in Fig. 9 bis Fig. 13 dargestellt.

Fig. 9 zeigt eine erste Anzeige zum Prozess zum Spezifizieren eines neuen Feldes. Es kann der Name eines Ortes (z.B. Land, Stand und/oder Straße) in ein Eingabefeld ("Suche einen Ort") eingegeben werden. Auf dem Display ist ein Ausschnitt der Erdoberfläche in einer Luftaufnahme oder in Form einer Landkarte dargestellt. Bei Eingeben des Namens eines Ortes wird ein Ausschnitt der Erdoberfläche gezeigt, der den Ort umfasst. Durch die von der Benutzung von Smartphones bekannten Fingerbewegungen kann der Nutzer den Ausschnitt verschieben, den Ausschnitt vergrößern (herauszoomen) oder den Ausschnitt verkleinern (hineinzoomen).

Ferner kann über eine virtuelle Schaltfläche ("Spezifiziere Punkt") ein Punkt spezifiziert werden, der in dem Feld oder an dem Rand des Feldes liegt. Bei Betätigen der virtuellen Schaltfläche wird ein solcher Punkt in die Mitte des Fadenkreuzes gesetzt. Dies ist in Fig. 10 gezeigt. Fig. 10 zeigt dieselbe Anzeige wie Fig. 9 mit dem Unterschied, dass nun ein erster Punkt des Feldes spezifiziert ist.

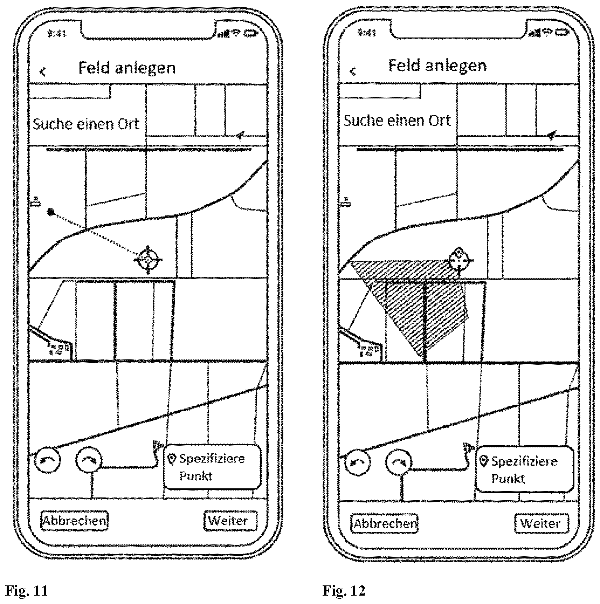

Ausgehend von dem spezifizierten Punkt kann ein Nutzer nun weitere Punkte des Feldes setzen (festlegen). Die Punkte werden durch Geraden miteinander verbunden. Dies ist in Fig. 11 und Fig. 12 dargestellt.

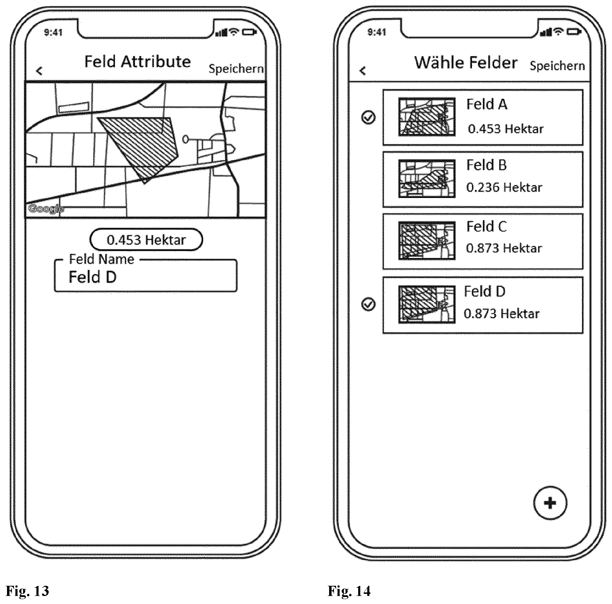

Das Computerprogramm kann so konfiguriert sein, dass es für ein spezifiziertes Feld automatisch die Größe errechnet. Fig. 13 zeigt das spezifizierte Feld und die errechnete Größe des Feldes ("0.453 Hektar"). Der Nutzer kann einen Namen für das Feld vergeben ("Feld Name"), im vorliegenden Fall ist es der Name "Feld D".

Fig. 14 zeigt eine weitere Anzeige des erfindungsgemäßen Computerprogramms. Es ist dargestellt, dass vier Felder mit den Namen "Feld A", "Feld B", "Feld C", "Feld D" angelegt worden sind. Der Nutzer kann diejenigen Felder auswählen, für die er eine Vorhersage einer Rückstandsmenge eines Pflanzenschutzmittels berechnen lassen möchte. Die virtuelle Schaltfläche mit dem ⊕-Zeichen zeigt an, dass weitere Felder spezifiziert (im Computerprogramm angelegt) werden können.

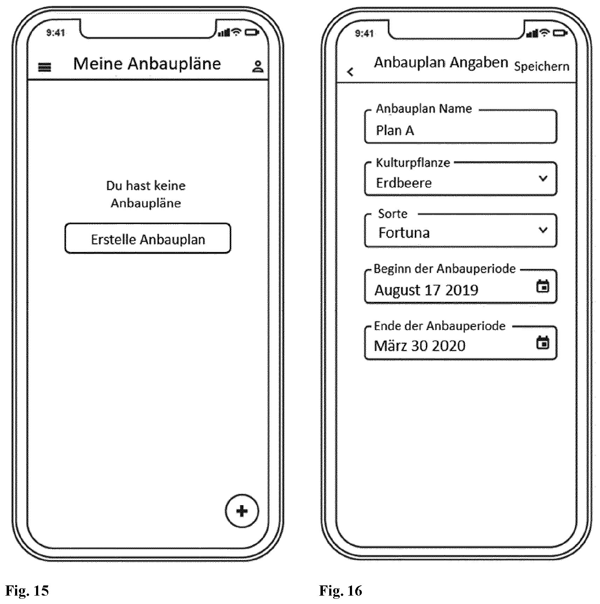

Fig. 15 zeigt eine weitere Anzeige des erfindungsgemäßen Computerprogramms. Das Computerprogramm zeigt dem Nutzer an, dass bisher keine Informationen zum Anbau einer Kulturpflanze und zur Applikation eines Pflanzenschutzmittels spezifiziert worden sind ("Du hast keine Anbaupläne"). Durch Betätigen einer virtuellen Schaltfläche ("Erstelle Anbauplan") kann der Nutzer einen Prozess zum Spezifizieren der entsprechenden Informationen starten. Der Prozess ist bildhaft in Fig. 16 dargestellt.

Fig. 16 zeigt eine Anzeige zum Erstellen eines Anbauplans für eine Kulturpflanze ("Anbauplan Angaben"). Die Anzeige umfasst eine Reihe von Eingabefeldern. In einem Eingabefeld kann der Nutzer dem jeweiligen Anbauplan einen Namen geben ("Anbauplan Name"). Im vorliegenden Fall hat der Nutzer als Namen "Plan A" eingegeben. In einem weiteren Eingabefeld kann der Nutzer die Kulturpflanze spezifizieren ("Kulturpflanze"). Dies geschieht im vorliegenden Fall durch Auswahl eines Eintrags in einer Liste. Im vorliegenden Fall hat der Nutzer als Kulturpflanze "Erdbeere" ausgewählt. In einem weiteren Eingabefeld kann der Nutzer die Kulturpflanzensorte spezifizieren ("Sorte"). Im vorliegenden Fall hat der Nutzer als Kulturpflanzensorte "Fortuna" ausgewählt. In einem weiteren Eingabefeld kann der Nutzer den Beginn der Anbauperiode spezifizieren ("Beginn der Anbauperiode"). Dies kann durch Eingabe eines Datums und/oder durch Auswahl eines Tages in einem virtuellen Kalender erfolgen. Im vorliegenden Fall hat der Nutzer als Beginn der Anbauperiode den 17. August 2019 spezifiziert. In einem weiteren Eingabefeld kann der Nutzer das Ende der Anbauperiode spezifizieren ("Ende der Anbauperiode"). Dies kann durch Eingabe eines Datums und/oder durch Auswahl eines Tages in einem virtuellen Kalender erfolgen. Im vorliegenden Fall hat der Nutzer als Ende der Anbauperiode den 30. März 2020 spezifiziert. Das Ende der Anbauperiode ist üblicherweise der Zeitpunkt der Ernte.

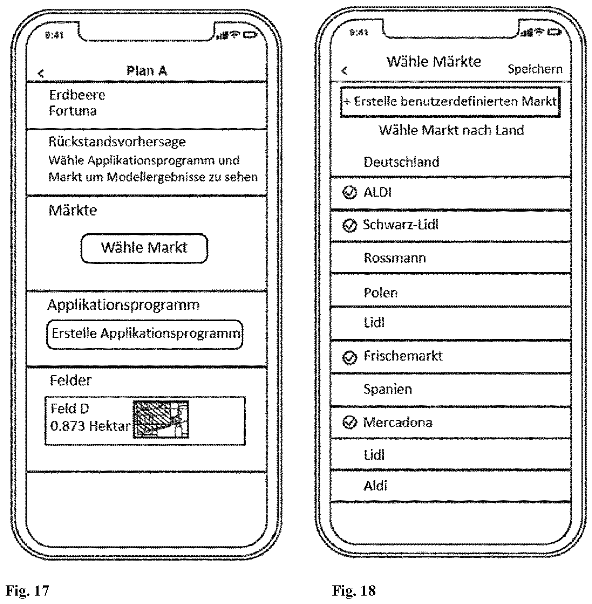

Fig. 17 zeigt eine weitere Anzeige des erfindungsgemäßen Computerprogramms. Fig. 17 zeigt einen Anbauplan mit dem Namen "Plan A" in einer Übersicht an. Der Anbauplan betrifft die Kulturpflanze "Erdbeere" der Sorte "Fortuna". Es ist ein Feld mit dem Namen "Feld D" spezifiziert, auf dem die Kulturpflanze angebaut wird / werden soll. Bevor das Computerprogramm eine Menge eines Rückstands eines Pflanzenschutzmittels berechnen (vorhersagen) kann, müssen noch ein oder mehrere "Märkte" und ein "Applikationsprogramm" für mindestens ein Pflanzenschutzmittel ("Applikationsprogramm") spezifiziert werden. Durch Betätigen der jeweiligen virtuellen Schaltfläche kann der Nutzer einen Prozess zum Spezifizieren eines Marktes ("Wähle Markt") oder einen Prozess zum Spezifizieren eines Applikationsprogramms für mindestens ein Pflanzenschutzmittel ("Erstelle Applikationsprogramm") starten.

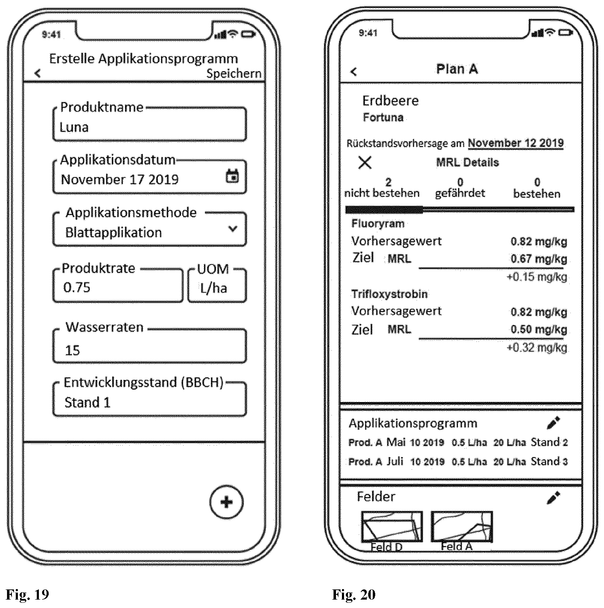

Der Prozess zum Spezifizieren eines Marktes ist beispielhaft in Fig. 18 dargestellt. Der Prozess zum Spezifizieren eines Applikationsprogramms für mindestens ein Pflanzenschutzmittel ist beispielhaft in Fig. 19 dargestellt.

Der Begriff "Markt" steht im vorliegenden Beispiel für eine Kombination aus einem Händler (oder eine Handelskette) und einem Land. Fig. 18 zeigt eine Übersicht von Märkten geordnet nach Ländern. Im vorliegenden Fall sind Handelsketten für drei Länder aufgelistet: für Deutschland die Handelsketten "ALDI", "Schwarz-Lidl" und "Rossmann", für Polen die Handelsketten "Lidl" und "Frischemarkt", für Spanien die Handelsketten "Mercadona", "Lidl" und "ALDI". Der Nutzer kann eine oder mehrere Handelsketten durch Anklicken auswählen. Im vorliegenden Fall hat der Nutzer die folgenden Kombinationen ausgewählt: Deutschland: "ALDI", Deutschland: "Schwarz-Lidl", Polen: "Frischemarkt", Spanien: "Mercadona". Durch Betätigen der virtuellen Schaltfläche kann der Nutzer weitere Märkte anlegen ("Erstelle benutzerdefinierten Markt").

Fig. 19 zeigt eine Anzeige mit einer Reihe von Eingabefeldern zum Spezifizieren eines Applikationsprogramms für mindestens ein Pflanzenschutzmittel. Über ein erstes Eingabefeld kann das Pflanzenschutzmittel durch Eingeben eines Produktnamens ("Produktname") spezifiziert werden. Im vorliegenden Fall wurde der Produktname "Luna" eingegeben. In einem weiteren Eingabefeld kann der Nutzer das Datum der Applikation mit dem Pflanzenschutzmittel eingeben und/oder auswählen. Im vorliegenden Fall hat der Nutzer als Datum den 17. November 2019 spezifiziert. In einem weiteren Eingabefeld kann der Nutzer die "Applikationsmethode" eingeben. Im vorliegenden Fall hat der Nutzer als Applikationsmethode "Blattapplikation" eingegeben. In zwei weiteren Eingabefeldern kann der Nutzer die Menge an ausgebrachtem oder auszubringendem Pflanzenschutzmittel eingeben ("Produktrate", "UOM" (= Unit of Measure)). Im vorliegenden Fall hat der Nutzer eine Menge von 0.75 L/ha eingegeben. In einem weiteren Eingabefeld kann der Nutzer eine Menge an ausgebrachtem Wasser eingeben ("Wasserraten"). Im vorliegenden Fall hat der Nutzer eine Menge von 15 L/ha eingegeben. In einem weiteren Eingabefeld kann der Nutzer den Entwicklungsstand der Kulturpflanze (beim Ausbringen des Pflanzenschutzmittels) in Form des BBCH-Codes eingeben ("Entwicklungsstand (BBCH)"). Im vorliegenden Fall hat der Nutzer den BBCH-Code 1 eingegeben ("Stand 1").

Fig. 20 zeigt eine Anzeige mit Ergebnissen einer Vorhersage. Die Ergebnisse werden für die Kulturpflanze "Erdbeere" der Sorte "Fortuna" vorhergesagt. Den Ergebnissen liegt ein Applikationsprogramm ("Plan A") zugrunde, bei dem zu zwei Zeitpunkten (10. Mai 2019 und 10. Juli 2019) jeweils 0,5 L/ha eines Pflanzenschutzmittels der Bezeichnung ("Prod. A") zusammen mit 20 L/ha Wasser appliziert worden sind. Zum 10. Mai 2019 lag/liegt die Kulturpflanze in dem Entwicklungsstadium mit dem BBCH-Code 2 ("Stand 2") vor; zum 10. Juli 2019 lag/liegt die Kulturpflanze in dem Entwicklungsstadium mit dem BBCH-Code 3 ("Stand 3") vor.

Das Pflanzenschutzmittel mit der Bezeichnung "Prod. A" umfasst zwei Wirkstoffe (Fluopyram, Trifloxystrobin). Als Zeitpunkt, für den die Vorhersage erfolgt, ist der 12. November 2019 angegeben ("Rückstandsvorhersage am November 12 2019"). Die berechnete (vorhergesagte) Rückstandsmenge an Fluopyram beträgt 0.82 mg/kg. Die berechnete (vorhergesagte) Rückstandsmenge an Trifloxystrobin beträgt 0.82 mg/kg. Beide Rückstandsmengen liegen oberhalb des MRL-Werts (0.67 mg/kg für Fluopyram, 0.5 mg/kg für Trifloxystrobin).

**Patentansprüche**

1. Vorrichtung (10) umfassend

   - eine Eingabeeinheit (11)
   - eine Steuer- und Berechnungseinheit (12) und
   - eine Ausgabeeinheit (13)

   wobei die Steuer- und Berechnungseinheit (12) konfiguriert ist, die Eingabeeinheit (11) zu veranlassen, folgende Eingabeinformationen zu empfangen:

   - angebaute Kulturpflanze,
   - verwendetes Pflanzenschutzmittel,
   - Zahl der Applikationen des Pflanzenschutzmittels und jeweils applizierte Mengen,
   - Zeitspannen zwischen der Applikation / den Applikationen und dem Erntezeitpunkt,
   - Informationen zur Biomasse der Kulturpflanze, die bei der Applikation / den Applikationen des Pflanzenschutzmittels jeweils vorgelegen hat,
   - Umweltbedingungen während des Anbaus der Kulturpflanze, insbesondere bei und/oder nach der Applikation / den Applikationen des Pflanzenschutzmittels,

   wobei die Steuer- und Berechnungseinheit (12) konfiguriert ist, eine Menge eines Rückstands des Pflanzenschutzmittels in und/oder auf den zum menschlichen und/oder tierischen Verzehr gedachten Teilen der Kulturpflanze zum Erntezeitpunkt der Kulturpflanze anhand der Eingabeinformationen zu berechnen,
   wobei die Steuer- und Berechnungseinheit (12) konfiguriert ist, die Ausgabeeinheit (13) zu veranlassen, Informationen zu der Menge des Rückstands auszugeben,
   wobei das Berechnen der Menge des Rückstands auf Basis einer mathematischen Funktionsgleichung erfolgt, wobei die mathematische Funktionsgleichung den Abbau des Pflanzenschutzmittels als Funktion der Zeit beschreibt, wobei die mathematische Funktionsgleichung mindestens einen Parameter aufweist, wobei der mindestens eine Parameter mit Hilfe eines Modells des maschinellen Lernens auf Basis der Eingabeinformationen berechnet wird.

2. Vorrichtung (10) gemäß Anspruch 1, wobei die Menge des Rückstands mittels einer Exponentialfunktion berechnet wird, wobei die Exponentialfunktion zwei Parameter aufweist, einen Anfangswert und eine Zeitkonstante, wobei die zwei Parameter mit Hilfe eines Modells des maschinellen Lernens auf Basis der Eingabeinformationen berechnet werden.

**3.** Vorrichtung (10) gemäß einem der Ansprüche 1 oder 2, wobei das Modell des maschinellen Lernens in einem überwachten Lernverfahren anhand von Trainingsdaten trainiert worden ist, einen Zusammenhang zwischen den Eingabeinformationen, vorzugsweise repräsentiert durch einen Merkmalvektor, und dem mindestens einen Parameter der mathematischen Funktionsgleichung zu lernen.

**4.** Vorrichtung (10) gemäß einem der Ansprüche 1 bis 3, wobei die Steuer- und Berechnungseinheit konfiguriert (12) ist,

- eine Maximalmenge eines Rückstands des Pflanzenschutzmittels in der Kulturpflanze oder Teilen davon zu ermitteln,
- die berechnete Menge des Rückstands mit der ermittelten Maximalmenge zu vergleichen,
- die Ausgabeeinheit (13) zu veranlassen, die Informationen auszugeben, ob und/oder inwieweit die berechnete Menge des Rückstands die Maximalmenge über- oder unterschreitet.

**5.** Vorrichtung (10) gemäß einem der Ansprüche 1 bis 4, wobei die Steuer- und Berechnungseinheit (12) konfiguriert ist,

- Länder und/oder Regionen zu ermitteln, für die die berechnete Menge des Rückstands keine behördlich zugelassene Höchstmenge des Rückstands in der Kulturpflanze oder Teilen davon überschreitet, und/oder Händler zu ermitteln, für die die berechnete Menge des Rückstands keine vorgeschriebene Höchstmenge des Rückstands in der Kulturpflanze oder Teilen davon überschreitet,
- die Ausgabeeinheit zu veranlassen, die Informationen auszugeben, welche Länder und/oder Regionen und/oder Händler ermittelt wurden.

**6.** Vorrichtung (10) gemäß einem der Ansprüche 1 bis 5, wobei die Menge des Rückstands gegenüber einem Nutzer als Anteil eines von einer staatlichen Behörde und/oder einem Händler vorgegebenen Maximalmenge angezeigt wird.

**7.** Computer-implementiertes Verfahren umfassend die Schritte:

- Empfangen und/oder Ermitteln von Eingabeinformationen durch ein Computersystem, wobei die Eingabeinformationen umfassen:

  ◦ angebaute Kulturpflanze,
  ◦ verwendetes Pflanzenschutzmittel,
  ◦ Zahl der Applikationen des Pflanzenschutzmittels und jeweils applizierte Mengen,

  ◦ Zeitspannen zwischen der Applikation / den Applikationen und dem Erntezeitpunkt,
  ◦ Informationen zur Biomasse der Kulturpflanze, die bei der Applikation / den Applikationen des Pflanzenschutzmittels jeweils vorgelegen hat,
  ◦ Umweltbedingungen während des Anbaus der Kulturpflanze, insbesondere bei und/oder nach der Applikation / den Applikationen des Pflanzenschutzmittels,

- Berechnen einer Menge eines Rückstands des Pflanzenschutzmittels in und/oder auf den zum menschlichen und/oder tierischen Verzehr gedachten Teilen der Kulturpflanze vorzugsweise zum Zeitpunkt der Ernte durch das Computersystem,
- Ausgeben einer Information zu der Menge des Rückstands über eine Ausgabeeinheit des Computersystems,

wobei das Berechnen der Menge des Rückstands auf Basis einer mathematischen Funktionsgleichung erfolgt, wobei die mathematische Funktionsgleichung den Abbau des Pflanzenschutzmittels als Funktion der Zeit beschreibt, wobei die mathematische Funktionsgleichung mindestens einen Parameter aufweist, wobei der mindestens eine Parameter mit Hilfe eines Modells des maschinellen Lernens auf Basis der Eingabeinformationen berechnet wird.

**8.** Verfahren gemäß Anspruch 7, wobei die Menge des Rückstands mittels einer Exponentialfunktion berechnet wird, wobei die Exponentialfunktion zwei Parameter aufweist, einen Anfangswert und eine Zeitkonstante, wobei die zwei Parameter mit Hilfe eines Modells des maschinellen Lernens auf Basis der Eingabeinformationen berechnet werden.

**9.** Verfahren gemäß Anspruch 7 oder 8, wobei das Modell des maschinellen Lernens in einem überwachten Lernverfahren anhand von Trainingsdaten trainiert worden ist, einen Zusammenhang zwischen den Eingabeinformationen, vorzugsweise repräsentiert durch einen Merkmalvektor, und dem mindestens einen Parameter der mathematischen Funktionsgleichung zu lernen.

**10.** System (S) umfassend

- ein erstes Computersystem (10) umfassend eine Eingabeeinheit (11), eine erste Steuer- und Berechnungseinheit (12), eine erste Sende- und Empfangseinheit (14) und eine Ausgabeeinheit (13),
- ein zweites Computersystem (20) umfassend eine zweite Steuer- und Berechnungseinheit (22) und eine zweite Sende- und Empfangseinheit (24),

wobei die erste Steuer- und Berechnungseinheit (12) konfiguriert ist, die Eingabeeinheit (11) zu veranlassen, folgende Eingabeinformationen zu empfangen und/oder zu ermitteln:

- ○ angebaute Kulturpflanze,
- ○ verwendetes Pflanzenschutzmittel,
- ○ Zahl der Applikationen des Pflanzenschutzmittels und jeweils applizierte Mengen
- ○ Zeitspannen zwischen der Applikation / den Applikationen und dem Erntezeitpunkt,
- ○ optional: Informationen zur Biomasse der Kulturpflanze, die bei der Applikation / den Applikationen des Pflanzenschutzmittels jeweils vorgelegen hat,
- ○ optional: Umweltbedingungen während des Anbaus der Kulturpflanze, insbesondere bei und/oder nach der Applikation / den Applikationen des Pflanzenschutzmittels,

wobei die erste Steuer- und Berechnungseinheit (12) konfiguriert ist, die erste Sende- und Empfangseinheit (14) zu veranlassen, die Eingabeinformationen über ein Netzwerk an das zweite Computersystem (20) zu übermitteln, wobei die zweite Steuer- und Berechnungseinheit (22) konfiguriert ist, die zweite Sende- und Empfangseinheit (24) zu veranlassen, die Eingabeinformationen über das Netzwerk zu empfangen,

wobei die zweite Steuer- und Berechnungseinheit (22) konfiguriert ist, folgende Informationen zu ermitteln, für den Fall dass die Informationen nicht bereits von dem ersten Computersystem (10) übermittelt wurden:

- ○ Informationen zur Biomasse der Kulturpflanze, die bei der Applikation / den Applikationen des Pflanzenschutzmittels jeweils vorgelegen hat und/oder
- ○ Umweltbedingungen während des Anbaus der Kulturpflanze, insbesondere bei und/oder nach der Applikation / den Applikationen des Pflanzenschutzmittels,

wobei die zweite Steuer- und Berechnungseinheit (22) konfiguriert ist, eine Menge eines Rückstands des Pflanzenschutzmittels in und/oder auf den zum menschlichen und/oder tierischen Verzehr gedachten Teilen der Kulturpflanze vorzugsweise zum Zeitpunkt der Ernte auf Basis der Eingabeinformationen zu berechnen, wobei das Berechnen der Menge des Rückstands auf Basis einer mathematischen Funktionsgleichung erfolgt, wobei die mathematische Funktionsgleichung den Abbau des Pflanzenschutzmittels als Funktion der Zeit beschreibt, wobei die mathematische Funktionsgleichung mindestens einen Parameter aufweist, wobei der mindestens eine Parameter mit Hilfe eines Modells des maschinellen Lernens auf Basis der Eingabeinformationen berechnet wird, wobei die zweite Steuer- und Berechnungseinheit (22) konfiguriert ist, die zweite Sende- und Empfangseinheit (24) zu veranlassen, die Menge des Rückstands über das Netzwerk an das erste Computersystem (10) zu übermitteln, wobei die erste Steuer- und Berechnungseinheit (12) konfiguriert ist, die erste Sende- und Empfangseinheit (14) zu veranlassen, die Menge des Rückstands über das Netzwerk zu empfangen,

wobei die erste Steuer- und Berechnungseinheit (12) konfiguriert ist, die Ausgabeeinheit (13) zu veranlassen Informationen zu der Menge des Rückstands gegenüber einem Nutzer auszugeben.

**11.** Computerprogrammprodukt umfassend einen Datenträger und Programmcode, der auf dem Datenträger gespeichert ist und der ein Computersystem, in dessen Arbeitsspeicher der Programmcode geladen ist, dazu veranlasst, die folgenden Schritte auszuführen:

- Empfangen und/oder Ermitteln folgender Eingabeinformationen:

- ○ angebaute Kulturpflanze,
- ○ verwendetes Pflanzenschutzmittel,
- ○ Zahl der Applikationen des Pflanzenschutzmittels und jeweils applizierte Mengen,
- ○ Zeitspannen zwischen der Applikation / den Applikationen und dem Erntezeitpunkt,
- ○ Informationen zur Biomasse der Kulturpflanze, die bei der Applikation / den Applikationen des Pflanzenschutzmittels jeweils vorgelegen hat,
- ○ Umweltbedingungen während des Anbaus der Kulturpflanze, insbesondere bei und/oder nach der Applikation / den Applikationen des Pflanzenschutzmittels,

- Berechnen einer Menge eines Rückstands des Pflanzenschutzmittels in und/oder auf den zum menschlichen und/oder tierischen Verzehr gedachten Teilen der Kulturpflanze vorzugsweise zum Zeitpunkt der Ernte der Kulturpflanze anhand der Eingabeinformationen,
- Ausgeben von Informationen zu der Menge des Rückstands,

wobei das Berechnen der Menge des Rückstands auf Basis einer mathematischen Funktionsgleichung, vorzugsweise auf Basis einer Exponentialfunktion, erfolgt, wobei die mathematische Funktionsgleichung den Abbau des Pflanzenschutzmittels als Funktion der Zeit beschreibt, wobei die mathematische Funktionsgleichung mindestens einen Parameter aufweist, wobei der mindestens eine Parameter mit Hilfe eines Modells des maschinellen Lernens auf Basis der Eingabeinformationen berechnet wird.

**12.** Computerprogrammprodukt gemäß Anspruch 11, wobei das Modell des maschinellen Lernens in einem überwachten Lernverfahren anhand von Trainingsdaten trainiert worden ist, einen Zusammenhang zwischen den Eingabeinformationen, vorzugsweise repräsentiert durch einen Merkmalvektor, und dem mindestens einen Parameter der mathematischen Funktionsgleichung zu lernen.

**Claims**

**1.** Device (10) comprising

- an input unit (11)
- a control and calculation unit (12) and
- an output unit (13)

wherein the control and calculation unit (12) is configured to trigger the input unit (11) to receive the following input information:

- crop plant being grown,
- crop protection product used,
- number of applications of the crop protection product and amounts applied each time,
- periods of time between the application(s) and harvesting time,
- information relating to the biomass of the crop plant that was present on each application of the crop protection product,
- environmental conditions during the growing of the crop plant, especially on and/or after the application(s) of the crop protection product,

wherein the control and calculation unit (12) is configured to calculate an amount of a residue of the crop protection product in and/or on the parts of the crop plant intended for human and/or animal consumption at the harvesting time of the crop plant, using the input information, wherein the control and calculation unit (12) is configured to trigger the output unit (13) to output information relating to the amount of residue, wherein the amount of residue is calculated on the basis of a mathematical function relationship, wherein the mathematical function relationship describes the degradation of the crop protection product as a function of time, wherein the mathematical function equation has at least one parameter, wherein the at least one parameter is calculated with the aid of a machine learning model on the basis of input information.

**2.** Device (10) according to Claim 1, wherein the amount of the residue is calculated by means of an exponential function, wherein the exponential function has two parameters, a starting value and a time constant, wherein the two parameters are calculated with aid of a machine learning model based on the input information.

**3.** Device (10) according to either of Claims 1 and 2, wherein the machine learning model has been trained in a monitored learning method using training data to learn a correlation between the input information, preferably represented by a feature vector, and the at least one parameter of the mathematical function relationship.

**4.** Device (10) according to any of Claims 1 to 3, wherein the control and calculation unit (12) is configured to

- ascertain a maximum amount of a residue of the crop protection product in the crop plant or parts thereof,
- compare the calculated amount of the residue with the maximum amount ascertained,
- trigger the output unit (13) to output the information as to whether and/or to what extent the calculated amount of the residue is above or below the maximum amount.

**5.** Device (10) according to any of Claims 1 to 4, wherein the control and calculation unit (12) is configured to

- identify countries and/or regions for which the calculated amount of the residue does not exceed any officially approved upper limit for the residue in the crop plant or parts thereof and/or identify traders for which the calculated amount of residue does not exceed any stipulated upper limit for the residue in the crop plant or parts thereof,
- trigger the output unit to output the information as to which countries and/or regions and/or traders have been identified.

**6.** Device (10) according to any of Claims 1 to 5, wherein the amount of the residue is displayed to a user as a proportion of a maximum amount stipulated by an official body and/or a trader.

**7.** Computer-implemented method comprising the steps of:

- receiving and/or ascertaining input information by means of a computer system, wherein the input information includes:

○ crop plant being grown,
○ crop protection product used,
○ number of applications of the crop protection product and amounts applied each time,
○ periods of time between the application(s) and harvesting time,
○ information relating to the biomass of the crop plant that was present on each application of the crop protection product,
○ environmental conditions during the growing of the crop plant, especially on and/or after the application(s) of the crop protection product,

- calculating an amount of a residue of the crop protection product in and/or on the parts of the crop plant intended for human and/or animal consumption, preferably at the time of harvesting, by means of the computer system,
- outputting information relating to the amount of residue via an output unit of the computer system,

wherein the amount of residue is calculated on the basis of a mathematical function relationship, wherein the mathematical function relationship describes the degradation of the crop protection product as a function of time, wherein the mathematical function equation has at least one parameter, wherein the at least one parameter is calculated with the aid of a machine learning model on the basis of input information.

**8.** Method according to Claim 7, wherein the amount of the residue is calculated by means of an exponential function, wherein the exponential function has two parameters, a starting value and a time constant, wherein the two parameters are calculated with aid of a machine learning model based on the input information.

**9.** Method according to Claim 7 or 8, wherein the machine learning model has been trained in a monitored learning method using training data to learn a correlation between the input information, preferably represented by a feature vector, and the at least one parameter of the mathematical function relationship.

**10.** System (S) comprising

- a first computer system (10) comprising an input unit (11), a first control and calculation unit (12), a first transmitter and receiver unit (14) and an output unit (13),
- a second computer system (20) comprising a second control and calculation unit (22) and a second transmitter and receiver unit (24),
wherein the first control and calculation unit (12) is configured to trigger the input unit (11) to receive and/or ascertain the following input information:

○ crop plant being grown,
○ crop protection product used,
○ number of applications of the crop protection product and amounts applied each time,
○ periods of time between the application(s) and harvesting time,
○ optionally: information relating to the biomass of the crop plant that was present on each application of the crop protection product,
○ optionally: environmental conditions during the growing of the crop plant, especially on and/or after the application(s) of the crop protection product,

wherein the first control and calculation unit (12) is configured to trigger the first transmitter and receiver unit (14) to transmit the input information via a network to the second computer system (20),
wherein the second control and calculation unit (22) is configured to trigger the second transmitter and receiver unit (24) to receive the input information via the network,
wherein the second control and calculation unit (22) is configured to ascertain the following information if the information has not already been transmitted by the first computer system (10):

○ information relating to the biomass of the crop plant that was present on each application of the crop protection product and/or
○ environmental conditions during the growing of the crop plant, especially on and/or after the application(s) of the crop protection product,

wherein the second control and calculation unit (22) is configured to calculate an amount of a residue of the crop protection product in and/or on the parts of the crop plant intended for human and/or animal consumption, preferably at the time of harvesting, on the basis of the input information, wherein the amount of residue is calculated on the basis of a mathematical function relationship, wherein the mathematical function relationship describes the degradation of the crop protection product as a function of time, wherein the mathematical function equation has at least one parameter, wherein the at least one parameter is calculated with the aid of a machine learning model on the basis of input information,

wherein the second control and calculation unit (22) is configured to trigger the second transmitter and receiver unit (24) to transmit the amount of the residue via the network to the first computer system (10),

wherein the first control and calculation unit (12) is configured to trigger the first transmitter and receiver unit (14) to receive the amount of the residue via the network,

wherein the first control and calculation unit (12) is configured to trigger the output unit (13) to output information relating to the amount of the residue to a user.

11. Computer program product comprising a data carrier and program code which is stored on the data carrier and which triggers a computer system, in the memory of which the program code has been loaded, to execute the following steps:

- receiving and/or ascertaining the following input information:

  ◦ crop plant being grown,
  ◦ crop protection product used,
  ◦ number of applications of the crop protection product and amounts applied each time,
  ◦ periods of time between the application(s) and harvesting time,
  ◦ information relating to the biomass of the crop plant that was present on each application of the crop protection product,
  ◦ environmental conditions during the growing of the crop plant, especially on and/or after the application(s) of the crop protection product,

- calculating an amount of a residue of the crop protection product in and/or on the parts of the crop plant intended for human and/or animal consumption, preferably at the time of harvesting of the crop plant, using the input information,
- outputting information relating to the amount of the residue,

wherein the amount of residue is calculated on the basis of a mathematical function relationship, preferably on the basis of an exponential function, wherein the mathematical function relationship describes the degradation of the crop protection product as a function of time, wherein the mathematical function equation has at least one parameter, wherein the at least one parameter is calculated with the aid of a machine learning model on the basis of input information.

12. Computer program product according to Claim 11, wherein the machine learning model has been trained in a monitored learning method using training data to learn a correlation between the input information, preferably represented by a feature vector, and the at least one parameter of the mathematical function relationship.

**Revendications**

1. Dispositif (10), comprenant

   - une unité d'entrée (11)
   - une unité de commande et de calcul (12), et
   - une unité de sortie (13),
   dans lequel l'unité de commande et de calcul (12) est configurée pour faire que l'unité d'entrée (11) reçoive les informations d'entrée suivantes :

     - la plante cultivée,
     - l'agent phytosanitaire utilisé,
     - le nombre des applications de l'agent phytosanitaire et les quantités appliquées respectivement,
     - les intervalles de temps entre l'application/les applications et le moment de la récolte,
     - des informations concernant la biomasse de la plante cultivée qui était disponible respectivement lors de l'application/des applications de l'agent phytosanitaire,
     - les conditions environnementales pendant la culture de la plante cultivée, en particulier au moment de l'application/des applications de l'agent phytosanitaire et/ou après celle(s)-ci,

   dans lequel l'unité de commande et de calcul (12) est configurée pour calculer à l'aide des informations d'entrée une quantité d'un résidu de l'agent phytosanitaire dans et/ou sur les parties de la plante cultivée destinées à la consommation humaine et/ou animale au moment de la récolte de la plante cultivée, dans lequel l'unité de commande et de calcul (12) est configurée pour faire que l'unité de sortie (13) sorte des informations concernant la quantité du résidu, dans lequel le calcul de la quantité du résidu est effectué sur la base d'une équation de la fonction mathématique, l'équation de la fonction mathématique décrivant la dégradation de l'agent phytosanitaire en fonction du temps, dans lequel l'équation de la fonction mathématique présente au moins un paramètre, ledit au moins un paramètre étant calculé à l'aide d'un modèle d'apprentissage machine sur la base des informations d'entrée.

2. Dispositif (10) selon la revendication 1, dans lequel la quantité du résidu est calculée au moyen d'une fonction exponentielle, la fonction exponentielle présentant deux paramètres, une valeur initiale et une constante de temps, les deux paramètres étant calculés à l'aide d'un modèle d'apprentissage machine sur la base des informations d'entrée.

3. Dispositif (10) selon l'une quelconque des revendications 1 ou 2, dans lequel le modèle d'apprentissage machine a été entraîné par un procédé d'apprentissage surveillé à l'aide de données d'entraînement afin d'apprendre une relation entre les informations d'entrée, de préférence représentées par un vecteur caractéristique, et ledit au moins un paramètre de l'équation de la fonction mathématique.

4. Dispositif (10) selon l'une quelconque des revendications 1 à 3, dans lequel l'unité de commande et de calcul (12) est configurée pour

- déterminer une quantité maximale d'un résidu de l'agent phytosanitaire dans la plante cultivée ou des parties de celle-ci,
- comparer la quantité calculée du résidu avec une quantité maximale déterminée,
- faire que l'unité de sortie (13) sorte les informations indiquant si et/ou dans quelle mesure la quantité calculée du résidu dépasse ou soupasse la quantité maximale.

5. Dispositif (10) selon l'une quelconque des revendications 1 à 4, dans lequel l'unité de commande et de calcul (12) est configurée pour

- déterminer des pays et/ou des régions pour lesquels la quantité calculée du résidu ne dépasse aucune quantité maximale approuvée par les autorités dans la plante cultivée ou des parties de celle-ci, et/ou déterminer des distributeurs pour qui la quantité calculée du résidu ne dépasse aucune quantité maximale prescrite du résidu dans la plante cultivée ou des parties de celle-ci,
- faire que l'unité de sortie sorte les informations indiquant les pays et/ou régions et/ou distributeurs déterminés.

6. Dispositif (10) selon l'une quelconque des revendications 1 à 5, dans lequel la quantité du résidu est affichée pour un utilisateur sous la forme d'une proportion d'une quantité maximale prédéfinie par une autorité gouvernementale et/ou un distributeur.

7. Procédé mis en œuvre par ordinateur, comprenant les étapes suivantes consistant à :

- recevoir et/ou déterminer des informations d'entrée par un système informatique, les informations d'entrée comprenant :

   ◦ la plante cultivée,
   ◦ l'agent phytosanitaire utilisé,
   ◦ le nombre des applications de l'agent phytosanitaire et les quantités appliquées respectivement,
   ◦ les intervalles de temps entre l'application/les applications et le moment de la récolte,
   ◦ des informations concernant la biomasse de la plante cultivée qui était disponible respectivement lors de l'application/des applications de l'agent phytosanitaire,
   ◦ les conditions environnementales pendant la culture de la plante cultivée, en particulier au moment de l'application/des applications de l'agent phytosanitaire et/ou après celle(s)-ci,

- calculer par le système informatique une quantité d'un résidu de l'agent phytosanitaire dans et/ou sur les parties de la plante cultivée destinées à la consommation humaine et/ou animale au moment de la récolte,
- sortir une information concernant la quantité du résidu par une unité de sortie du système informatique,

dans lequel le calcul de la quantité du résidu est effectué sur la base d'une équation de la fonction mathématique, l'équation de la fonction mathématique décrivant la dégradation de l'agent phytosanitaire en fonction du temps, dans lequel l'équation de la fonction mathématique présente au moins un paramètre, ledit au moins un paramètre étant calculé à l'aide d'un modèle d'apprentissage machine sur la base des informations d'entrée.

8. Procédé selon la revendication 7, dans lequel la quantité du résidu est calculée au moyen d'une fonction exponentielle, la fonction exponentielle présentant deux paramètres, une valeur initiale et une constante de temps, les deux paramètres étant calculés à l'aide d'un modèle d'apprentissage machine sur la base des informations d'entrée.

9. Procédé selon la revendication 7 ou 8, dans lequel le modèle d'apprentissage machine a été entraîné par un procédé d'apprentissage surveillé à l'aide de données d'entraînement afin d'apprendre une relation entre les informations d'entrée, de préférence représentées par un vecteur caractéristique, et ledit au moins un paramètre de l'équation de la fonction mathématique.

10. Système (S), comprenant

- un premier système informatique (10) comprenant une unité d'entrée (11), une première unité de commande et de calcul (12), une première unité d'émission et de réception (14) et une unité de sortie (13),
- un deuxième système informatique (20) comprenant une deuxième unité de commande et de calcul (22) et une deuxième unité d'émission et de réception (24),

dans lequel la première unité de commande et de calcul (12) est configurée pour faire que l'unité d'entrée (11) reçoive et/ou détermine les informations d'entrée suivantes :

◦ la plante cultivée,
◦ l'agent phytosanitaire utilisé,
◦ le nombre des applications de l'agent phytosanitaire et les quantités appliquées respectivement,
◦ les intervalles de temps entre l'application/les applications et le moment de la récolte,
◦ en option : des informations concernant la biomasse de la plante cultivée qui était disponible respectivement lors de l'application/des applications de l'agent phytosanitaire,
◦ en option : les conditions environnementales pendant la culture de la plante cultivée, en particulier au moment de l'application/des applications de l'agent phytosanitaire et/ou après celle(s)-ci,

dans lequel la première unité de commande et de calcul (12) est configurée pour faire que la première unité d'émission et de réception (14) transmette les informations d'entrée par un réseau au deuxième système informatique (20),
dans lequel la deuxième unité de commande et de calcul (22) est configurée pour faire que la deuxième unité d'émission et de réception (24) reçoive les informations d'entrée par le réseau,
dans lequel la deuxième unité de commande et de calcul (22) est configurée pour déterminer les informations suivantes au cas où les informations n'auraient pas déjà été transmises par le premier système informatique (10) :

◦ des informations concernant la biomasse de la plante cultivée qui était disponible respectivement lors de l'application/des applications de l'agent phytosanitaire, et/ou
◦ les conditions environnementales pendant la culture de la plante cultivée, en particulier au moment de l'application/des applications de l'agent phytosanitaire et/ou après celle(s)-ci,

dans lequel la deuxième unité de commande et de calcul (22) est configurée pour calculer une quantité d'un résidu de l'agent phytosanitaire dans et/ou sur les parties de la plante cultivée destinées à la consommation humaine et/ou animale de préférence au moment de la récolte sur la base des informations d'entrée, dans lequel le calcul de la quantité du résidu est effectué sur la base d'une équation de la fonction mathématique, l'équation de la fonction mathématique décrivant la dégradation de l'agent phytosanitaire en fonction du temps, dans lequel l'équation de la fonction mathématique présente au moins un paramètre, ledit au moins un paramètre étant calculé à l'aide d'un modèle d'apprentissage machine sur la base des informations d'entrée,
dans lequel la deuxième unité de commande et de calcul (22) est configurée pour faire que la première unité d'émission et de réception (24) transmette la quantité du résidu par le réseau au premier système informatique (10),
dans lequel la première unité de commande et de calcul (12) est configurée pour faire que la première unité d'émission et de réception (14) reçoive la quantité du résidu par le réseau,
dans lequel la première unité de commande et de calcul (12) est configurée pour faire que l'unité de sortie (13) sorte des informations concernant la quantité du résidu à un utilisateur.

11. Produit de programme informatique, comprenant un support de données et du code programme qui est stocké sur le support de données et qui fait qu'un système informatique, dans la mémoire vive duquel est chargé le code programme, exécute les étapes suivantes consistant à :

- recevoir et/ou déterminer les informations d'entrée suivantes :

◦ la plante cultivée,
◦ l'agent phytosanitaire utilisé,
◦ le nombre des applications de l'agent phytosanitaire et les quantités appliquées respectivement,
◦ les intervalles de temps entre l'application/les applications et le moment de la récolte,

◦ des informations concernant la biomasse de la plante cultivée qui était disponible respectivement lors de l'application/des applications de l'agent phytosanitaire,

o les conditions environnementales pendant la culture de la plante cultivée, en particulier au moment de l'application/des applications de l'agent phytosanitaire et/ou après celle(s)-ci,

- calculer à l'aide des informations d'entrée une quantité d'un résidu de l'agent phytosanitaire dans et/ou sur les parties de la plante cultivée destinées à la consommation humaine et/ou animale au moment de la récolte,
- sortir des informations concernant la quantité du résidu,

dans lequel le calcul de la quantité du résidu est effectué sur la base d'une équation de la fonction mathématique, de préférence sur la base d'une fonction exponentielle, dans lequel l'équation de la fonction mathématique décrit la dégradation de l'agent phytosanitaire en fonction du temps, dans lequel l'équation de la fonction mathématique présente au moins un paramètre, ledit au moins un paramètre étant calculé à l'aide d'un modèle d'apprentissage machine sur la base des informations d'entrée.

12. Produit de programme informatique selon la revendication 11, dans lequel le modèle d'apprentissage machine a été entraîné par un procédé d'apprentissage surveillé à l'aide de données d'entraînement afin d'apprendre une relation entre les informations d'entrée, de préférence représentées par un vecteur caractéristique, et ledit au moins un paramètre de l'équation de la fonction mathématique.

EP 4 287 831 B1

Fig. 1

Fig. 2

EP 4 287 831 B1

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

EP 4 287 831 B1

**Fig. 17**

9:41

< Plan A

Erdbeere
Fortuna

Rückstandsvorhersage
Wähle Applikationsprogramm und
Markt um Modellergebnisse zu sehen

Märkte

Wähle Markt

Applikationsprogramm

Erstelle Applikationsprogramm

Felder

Feld D
0.873 Hektar

**Fig. 18**

9:41

< Wähle Märkte    Speichern

+ Erstelle benutzerdefinierten Markt

Wähle Markt nach Land

Deutschland

⊘ ALDI

⊘ Schwarz-Lidl

Rossmann

Polen

Lidl

⊘ Frischemarkt

Spanien

⊘ Mercadona

Lidl

Aldi

Erstelle Applikationsprogramm
‹                                    Speichern

Produktname
Luna

Applikationsdatum
November 17 2019 📅

Applikationsmethode
Blattapplikation            ⌄

Produktrate          UOM
0.75                 L/ha

Wasserraten
15

Entwicklungsstand (BBCH)
Stand 1

⊕

**Fig. 19**

9:41

‹          Plan A

Erdbeere
Fortuna

Rückstandsvorhersage am November 12 2019
✕              MRL Details
2              0              0
nicht bestehen   gefährdet   bestehen

Fluoryram
Vorhersagewert                    0.82 mg/kg
Ziel   MRL                        0.67 mg/kg
                                  +0.15 mg/kg

Trifloxystrobin
Vorhersagewert                    0.82 mg/kg
Ziel   MRL                        0.50 mg/kg
                                  +0.32 mg/kg

Applikationsprogramm              ✎
Prod. A Mai 10 2019  0.5 L/ha  20 L/ha  Stand 2
Prod. A Juli 10 2019  0.5 L/ha  20 L/ha  Stand 3

Felder                            ✎

Feld D        Feld A

**Fig. 20**

36

## EP 4 287 831 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3962005 A
- CN 112150300 A
- EP 3346822 A1
- WO 2020137085 A1
- WO 2018050580 A1
- WO 2017222722 A1
- WO 2018058821 A1
- US 20020016676 A
- US 20180018414 A1
- WO 2018099220 A1

**In der Beschreibung aufgeführte Nicht-Patentliteratur**

- *Enzyklopädie aufgeführten Pflanzen: Christopher Cumo: Encyclopedia of Cultivated Plants: From Acacia to Zinnia*, 2013, vol. 1
- *Journal für Kulturpflanzen*, 2009, vol. 61 (7), 247-253
- *Nachrichtenbl. Deut. Pflanzenschutzd.*, 2007, vol. 59 (7), 155-161
- *Environ. Sci. Technol.*, 2019, vol. 53, 5838-5847
- **SOULAS, G.** ; **LAGACHERIE, B.** *Biol Fertil Soils*, 2001, vol. 33, 551, https://doi.org/10.1007/s003740100363
- **BEULKE, S.** ; **BROWN, C.D.** *Biol Fertil Soils*, 2001, vol. 33, 558, https://doi.org/10.1007/s003740100364
- **PAGEL** ; **HOLGE et al.** *Biogeochemistry*, 2014, vol. 117, 185-204, www.jstor.org/stable/24716853
- **MARCO GÜNTHER** ; **KAI VELTEN**. Mathematische Modellbildung und Simulation. Wiley-VCH Verlag, October 2014
- **DANIEL WALLACH** ; **DAVID MAKOWSKI** ; **JAMES W. JONES** ; **FRANCOIS BRUN**. Working with Dynamic Crop Models. Elsevier, 2014
- **DANIEL WALLACH** ; **DAVID MAKOWSKI** ; **JAMES W. JONES** ; **FRANCOIS BRUN.** Working with Dynamic Crop Models. Elsevier, 2014
- **H. HOFFMANN et al.** Impact of spatial soil and climate input data aggregation on regional yield simulations. *PLoS ONE*, vol. 11 (4), 0151782
- **H. HOFFMANN et al.** Impact of spatial soil and climate input data aggregation on regional yield simulations.. *PLoS ONE*, vol. 11 (4), 0151782
- **B. M. S. MORAN et al.** Opportunities and Limitations for Image-Based Remote Sensing in Precision Crop Management. *Remote Sensing of Environment*, 1997, vol. 61, 319-346
- **B. J. FROCHTE**. Maschinelles Lernen. Hanser-Verlag, 2019
- **G. CIABURRO et al.** Neural Networks with R. Packt Publishing, 2017
- **T. RASHID**. Make Your Own Neural Network. O'Reilly, 2016
- **PETER GRITZMANN**. Grundlagen der Mathematischen Optimierung. Springer Spektrum, 2013

37